(19) Europäisches Patentamt
European Patent Office
Office européen des brevets

(11) **EP 4 422 235 A1**

(12) **EUROPEAN PATENT APPLICATION**
published in accordance with Art. 153(4) EPC

(43) Date of publication:
**28.08.2024 Bulletin 2024/35**

(21) Application number: **22886150.6**

(22) Date of filing: **28.10.2022**

(51) International Patent Classification (IPC):
***H04W 12/02*** (2009.01)

(52) Cooperative Patent Classification (CPC):
**H04W 12/02; H04W 12/06**

(86) International application number:
**PCT/CN2022/128443**

(87) International publication number:
**WO 2023/072275 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.10.2021 CN 202111278529**

(71) Applicant: **Huawei Technologies Co., Ltd.
Shenzhen, Guangdong 518129 (CN)**

(72) Inventors:
• **LI, He
Shenzhen, Guangdong 518129 (CN)**
• **WU, Rong
Shenzhen, Guangdong 518129 (CN)**
• **HU, Li
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD, APPARATUS AND SYSTEM**

(57) This application provides a communication method, apparatus, and system, to determine a mode for authenticating a terminal device. The communication system includes unified data management and an authentication server function. The unified data management is configured to: determine, based on anonymous domain information and configuration information, an authentication mode for authenticating the terminal device, and send an authentication obtaining response message to the authentication server function. The authentication server function is configured to send an authentication request message to a network slice-specific and standalone non-public network authentication and authorization function based on authentication indication information. The anonymous domain information indicates an identifier of a network to which an authentication device capable of authenticating the terminal device belongs, and the authentication mode includes an external authentication mode or an internal authentication mode. The configuration information includes an identifier of one or more networks corresponding to the external authentication mode and/or an identifier of one or more networks corresponding to the internal authentication mode, and the authentication obtaining response message includes the authentication indication information indicating the authentication mode.

FIG. 4

**Description**

This application claims priority to Chinese Patent Application No. 202111278529.6, filed with the China National Intellectual Property Administration on October 30, 2021 and entitled "COMMUNICATION METHOD, APPARATUS, AND SYSTEM", which is incorporated herein by reference in its entirety.

**TECHNICAL FIELD**

This application relates to the communication field, and in particular, to a communication method, apparatus, and system.

**BACKGROUND**

Existing authentication includes two modes. In one mode, an authentication authorization accounting (authentication authorization accounting, AAA) server completes an authentication process with a terminal device. The AAA server does not belong to a network to which an authentication server function AUSF (authentication server function, AUSF) network element providing a network service for the terminal device belongs. This mode may be briefly referred to as an external authentication mode. In the other mode, an AUSF network element completes an authentication process with a terminal device. The AUSF network element and the terminal device belong to a same network. This mode may be briefly referred to as an internal authentication mode. For example, the authentication process may include: The network authenticates the terminal device and the terminal device authenticates the network, to prevent an unauthorized terminal device from occupying a network resource, and prevent the terminal device from entering an unauthorized network and being cheated of key information.

However, no corresponding solution is provided in the industry for how to determine whether to use the external authentication mode or the internal authentication mode.

**SUMMARY**

Embodiments of this application provide a communication method, apparatus, and system, to provide an authentication mode determining solution, so as to determine a mode for authenticating a terminal device.

To achieve the foregoing objective, the following technical solutions are used in this application:

According to a first aspect, a communication system is provided. The communication system includes unified data management and an authentication server function.

The authentication server function is configured to send an authentication obtaining request message to the unified data management. The authentication obtaining request message includes an anonymous subscription concealed identifier, the anonymous subscription concealed identifier includes anonymous domain information, and the anonymous domain information indicates an identifier of a network to which an authentication device capable of authenticating a terminal device belongs.

The unified data management is configured to: receive the authentication obtaining request message from the authentication server function, determine, based on the anonymous domain information and configuration information, an authentication mode for authenticating the terminal device, and send an authentication obtaining response message to the authentication server function. The authentication mode includes an external authentication mode or an internal authentication mode, the configuration information includes an identifier of one or more networks corresponding to the external authentication mode and/or an identifier of one or more networks corresponding to the internal authentication mode. The authentication obtaining response message includes an anonymous subscription permanent identifier and authentication indication information indicating the authentication mode, and the anonymous subscription permanent identifier includes the anonymous domain information.

The authentication server function is further configured to: receive the authentication obtaining response message from the unified data management, and send an authentication request message to a network slice-specific and standalone non-public network authentication and authorization function based on the authentication indication information. The authentication request message is used to request to authenticate the terminal device, and the authentication request message includes the anonymous subscription permanent identifier.

Based on the communication system according to the first aspect, the unified data management receives the anonymous subscription concealed identifier including the anonymous domain information, where the anonymous domain information indicates the identifier of the network to which the authentication device capable of authenticating the terminal device belongs, and determines the authentication indication information based on the anonymous domain information and the configuration information. The authentication indication information indicates the authentication mode, and the configuration information includes the identifier of the one or more networks corresponding to the external authentication mode and/or the identifier of the one or more networks corresponding to the internal authentication mode. In this way, the mode for authenticating the terminal device may be successfully determined.

In a possible design manner, the anonymous subscription concealed identifier may further include anonymous user name information and a routing indicator, and the anonymous user name information is a default value.

In a possible design manner, the communication system provided in the first aspect may further include the network slice-specific and standalone non-public network authentication and authorization function.

The network slice-specific and standalone non-public network authentication and authorization function is configured to: receive the authentication request message from the authentication server function, and send an authentication response message to the authentication server function. The authentication response message may include a real subscription permanent identifier and/or an authentication success message, the real subscription permanent identifier may include real user name information, the real user name information may be used to identify the terminal device, and the authentication success message may indicate that the authentication on the terminal device succeeds.

The authentication server function is further configured to: receive the authentication response message from the network slice-specific and standalone non-public network authentication and authorization function, and send an authentication result confirmation request message to the unified data management when real domain information matches the anonymous domain information. The authentication result confirmation request message may include the real subscription permanent identifier and authentication result indication information, and the authentication result indication information indicates that the authentication on the terminal device succeeds.

The unified data management is further configured to: receive the authentication result confirmation request message from the authentication server function, and store the real subscription permanent identifier and the authentication result indication information.

In this way, the authentication server function determines, based on the anonymous domain information and the real domain information, whether a real subscription permanent identifier used in a process in which an external authentication device performs authentication is the same as a real subscription permanent identifier of the terminal device. If the real subscription permanent identifier used in the process in which the external authentication device performs authentication is the same as the real subscription permanent identifier of the terminal device, two-way authentication between the terminal device and a network side can be completed. The terminal device considers that the network is real, and the network considers that the terminal device is real.

In a possible design manner, the authentication response message may further include a master key. The authentication server function is further configured to generate an intermediate key based on the master key and the real subscription permanent identifier.

In a possible design manner, an authentication response message further includes a master key, and the communication system provided in the first aspect may further include an access and mobility management function and the network slice-specific and standalone non-public network authentication and authorization function.

The network slice-specific and standalone non-public network authentication and authorization function is configured to: receive the authentication request message from the authentication server function, and send the authentication response message to the authentication server function. The authentication response message includes a real subscription permanent identifier and/or an authentication success message, the real subscription permanent identifier includes real user name information, the real user name information identifies the terminal device, and the authentication success message indicates that the authentication on the terminal device succeeds.

The authentication server function is further configured to: receive the authentication response message from the network slice-specific and standalone non-public network authentication and authorization function; and in response to the authentication success message, generate network-side first verification information based on the master key, the real subscription permanent identifier, and a network-side counter value; and send the authentication response message to the access and mobility management function, where the authentication response message includes the authentication success message, the network-side first verification information, and the network-side counter value.

The access and mobility management function is configured to: receive the authentication response message from the authentication server function, and send a non-access stratum security mode command message to the terminal device. The non-access stratum security mode command message includes the authentication success message, the network-side first verification information, and the network-side counter value.

The access and mobility management function is further configured to send an authentication intermediate message to the authentication server function. The authentication intermediate message includes terminal-side second verification information and a terminal-side counter value.

The authentication server function is further configured to: receive the authentication intermediate message from the access and mobility management function; generate network-side second verification information based on the master key, the real subscription permanent identifier, and the terminal-side counter value; determine whether the terminal-side second verification information is consistent with the network-side second verification information; and when the terminal-side second verification information is consistent with the network-side second verification information, send an authentication result confirmation request message to the unified data management. The authentication result confirmation request message includes the real subscription permanent identifier and authentication result indication information, and the authentication result indication information indicates that the authentication on the terminal device succeeds.

The unified data management is further configured to: receive the authentication result confirmation request message from the authentication server function, and store the real subscription permanent identifier and the authentication result indication information.

In this way, it is determined, by determining whether terminal-side verification information is the same as network-side verification information, whether a real subscription permanent identifier used for authentication is the same as a real subscription permanent identifier of the terminal device. In this way, two-way authentication between the terminal device and a network side can be completed. The terminal device considers that the network is real, and the network considers that the terminal device is real.

In a possible design manner, the authentication server function is further configured to: generate an intermediate key based on the master key, and generate the network-side first verification information based on the intermediate key, the real subscription permanent identifier, and the network-side counter value. In this way, the network-side first verification information is generated based on the real subscription permanent identifier. After receiving the first verification information, the terminal device may determine whether the real subscription permanent identifier used when the authentication device performs authentication is the same as the real subscription permanent identifier of the terminal device.

In a possible design manner, an authentication response message further includes a master key, and the communication system may further include an access and mobility management function and the network slice-specific and standalone non-public network authentication and authorization function.

The network slice-specific and standalone non-public network authentication and authorization function is configured to: receive the authentication request message from the authentication server function, and send the authentication response message to the authentication server function. The authentication response message includes a real subscription permanent identifier, an authentication success message, and the master key, the real subscription permanent identifier includes real user name information, the real user name information identifies the terminal device, and the authentication success message indicates that the authentication on the terminal device succeeds.

The authentication server function is further configured to: receive the authentication response message from the network slice-specific and standalone non-public network authentication and authorization function, and send the authentication response message to the access and mobility management function. The authentication response message includes the real subscription permanent identifier and/or the authentication success message, and an intermediate key Kseaf.

The access and mobility management function is configured to: receive the authentication response message from the authentication server function, and send a non-access stratum security mode command message to the terminal device. The non-access stratum security mode command message includes the authentication success message.

When the access and mobility management function and the terminal device successfully perform a non-access stratum security mode command procedure, the access and mobility management function is further configured to send an authentication result message to the authentication server function. The authentication result message includes authentication result indication information, and the authentication result indication information indicates that the authentication on the terminal device succeeds.

The authentication server function is further configured to: receive the authentication result message from the access and mobility management function, and send an authentication result response message to the access and mobility management function.

The access and mobility management function is further configured to receive the authentication result response message from the authentication server function.

The authentication server function is further configured to send an authentication result confirmation request message to the unified data management in response to the authentication result indication information. The authentication result confirmation request message includes the real subscription permanent identifier and the authentication result indication information.

The unified data management is further configured to: receive the authentication result confirmation request message from the authentication server function, and store the real subscription permanent identifier and the authentication result indication information.

In this way, the non-access stratum security mode command procedure is performed after an authentication procedure. If the non-access stratum security mode command procedure succeeds, it can be learned that the real subscription permanent identifier used for authentication is the same as the real subscription permanent identifier of the terminal device. Therefore, identity information corresponding to a credential used in the process in which the external authentication device performs authentication is the same as identity information corresponding to a credential of the terminal device. In this way, two-way authentication between the terminal device and the network side can be completed.

The terminal device considers that the network is real, and the network considers that the terminal device is real.

In a possible design manner, the communication system according to the first aspect may further include the external authentication device. The external authentication device is configured to: receive a protocol request message from the network slice-specific and standalone non-public network authentication and authorization function, authenticate the terminal device, and send a protocol response message to the network slice-specific and standalone non-public network authentication and authorization function. Optionally, the protocol request message may include the anonymous subscription permanent identifier, or may include the anonymous domain information and does not include information other than the anonymous domain information in the anonymous subscription permanent identifier. The protocol response message may include the real subscription permanent identifier, and may further include the authentication success message and/or the master key. In this way, the terminal device may be authenticated in the external authentication mode.

According to a second aspect, a communication method is provided. The communication method includes: receiving an authentication obtaining request message from an authentication server function; determining, based on anonymous domain information and configuration information, an authentication mode for authenticating a terminal device; and sending an authentication obtaining response message to the authentication server function. The authentication obtaining request message includes an anonymous subscription concealed identifier, the anonymous subscription concealed identifier includes the anonymous domain information, and the anonymous domain information indicates an identifier of a network to which an authentication device capable of authenticating the terminal device belongs. The authentication mode includes an external authentication mode or an internal authentication mode, the configuration information includes an identifier of one or more networks corresponding to the external authentication mode and/or an identifier of one or more networks corresponding to the internal authentication mode. The authentication obtaining response message includes authentication indication information indicating the authentication mode.

In a possible design manner, the determining, based on anonymous domain information and configuration information, an authentication mode for authenticating a terminal device may include: when the identifier of the network to which the authentication device capable of authenticating the terminal device belongs matches the identifier of the one or more networks corresponding to the external authentication mode, determining that the authentication mode for authenticating the terminal device is the external authentication mode; or when the identifier of the network to which the authentication device capable of authenticating the terminal device belongs matches the identifier of the one or more networks corresponding to the internal authentication mode, determining that the authentication mode for authenticating the terminal device is the internal authentication mode.

In a possible design manner, the authentication obtaining response message further includes an anonymous subscription permanent identifier, the anonymous subscription permanent identifier is determined based on the anonymous subscription concealed identifier, and the anonymous subscription permanent identifier includes the anonymous domain information.

In a possible design manner, the anonymous subscription concealed identifier further includes anonymous user name information and a routing indicator, and the anonymous user name information is a default value.

In a possible design manner, the communication method provided in the second aspect may further include: receiving an authentication result confirmation request message from the authentication server function; and storing a real subscription permanent identifier and authentication result indication information. The authentication result confirmation request message includes the real subscription permanent identifier and the authentication result indication information, and the authentication result indication information indicates that the authentication on the terminal device succeeds. The real subscription permanent identifier includes real user name information, and the real user name information identifies the terminal device.

In addition, for technical effect of the communication method according to the second aspect, refer to the technical effect of the communication system according to any possible implementation of the first aspect. Details are not described herein again.

According to a third aspect, a communication method is provided. The method includes: sending an authentication obtaining request message to unified data management; receiving an authentication obtaining response message from the unified data management; sending an authentication request message to a network slice-specific and standalone non-public network authentication and authorization function based on authentication indication information; receiving an authentication response message from the network slice-specific and standalone non-public network authentication and authorization function; and sending an authentication result confirmation request message to the unified data management when real domain information matches anonymous domain information.

The authentication obtaining request message includes an anonymous subscription concealed identifier, the anonymous subscription concealed identifier includes the anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication result confirmation request message includes the real subscription permanent identifier and authentication result indication information, and the authentication result indication information indicates that the authentication on the terminal device succeeds.

In a possible design manner, the authentication response message further includes a master key, and the communication method provided in the third aspect may further include: generating an intermediate key based on the master key and the real subscription permanent identifier.

In a possible design manner, the anonymous subscription concealed identifier further includes anonymous user name information and a routing indicator, and the anonymous user name information is a default value.

In addition, for technical effect of the communication method according to the third aspect, refer to the technical effect of the communication system according to any possible implementation of the first aspect. Details are not described herein again.

According to a fourth aspect, a communication method is provided. The method includes: sending an authentication obtaining request message to unified data management; receiving an authentication obtaining response message from the unified data management; sending an authentication request message to a network slice-specific and standalone non-public network authentication and authorization function based on authentication indication information; receiving an authentication response message from the network slice-specific and standalone non-public network authentication and authorization function; in response to an authentication success message, generating network-side first verification information based on a master key, a real subscription permanent identifier, and a network-side counter value; sending the authentication response message to an access and mobility management function, where the authentication response message includes the authentication success message, the network-side first verification information, and the network-side counter value; receiving an authentication intermediate message from the access and mobility management function; generating network-side second verification information based on the master key, the real subscription permanent identifier, and a terminal-side counter value; determining whether terminal-side second verification information is consistent with the network-side second verification information; and when terminal-side second verification information is consistent with the network-side second verification information, send an authentication result confirmation request message to the unified data management.

The authentication obtaining request message includes an anonymous subscription concealed identifier, the anonymous subscription concealed identifier includes anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes the real subscription permanent identifier, the authentication success message, and the master key, the real subscription permanent identifier includes real user name information, the real user name information identifies the terminal device, and the authentication success message indicates that the authentication on the terminal device succeeds. The authentication intermediate message includes the terminal-side second verification information and the terminal-side counter value. The authentication result confirmation request message includes the real subscription permanent identifier and authentication result indication information.

In a possible design manner, the anonymous subscription concealed identifier further includes anonymous user name information and a routing indicator, and the anonymous user name information is a default value.

In a possible design manner, the generating network-side first verification information based on a master key, a real subscription permanent identifier, and a network-side counter value includes: generating an intermediate key based on the master key; and generating the network-side first verification information based on the intermediate key, the real subscription permanent identifier, and the network-side counter value.

In addition, for technical effect of the communication method according to the fourth aspect, refer to the technical effect of the communication system in any possible implementation of the first aspect. Details are not described herein again.

According to a fifth aspect, a communication method is provided. The method includes: sending an authentication obtaining request message to unified data management; receiving an authentication obtaining response message from the unified data management; sending an authentication request message to a network slice-specific and standalone non-public network authentication and authorization function based on authentication indication information; receiving an authentication response message from the network slice-specific and standalone non-public network authentication and authorization function; sending the authentication response message to an access and mobility management function; receiving an authentication result message from the access and mobility management function; and sending an authentication result confirmation request message to the unified data management in response to authentication result indication information.

The authentication obtaining request message includes an anonymous subscription concealed identifier, the anonymous subscription concealed identifier includes anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication response message includes the real subscription permanent identifier and/or the authentication success message. The authentication result message includes the authentication result indication information, and the authentication result indication information indicates that the authentication on the terminal device succeeds. The authentication result confirmation request message includes the real subscription permanent identifier and the authentication result indication information.

In a possible design manner, the authentication response message further includes a master key, and the communication method provided in the fifth aspect may further include: generating an intermediate key based on the master key.

In a possible design manner, the anonymous subscription concealed identifier further includes anonymous user name information and a routing indicator, and the anonymous user name information is a default value.

In addition, for technical effect of the communication method according to the fifth aspect, refer to the technical effect of the communication system in any possible implementation of the first aspect. Details are not described herein again.

According to a sixth aspect, a communication method is provided. The method includes: determining an anonymous subscription concealed identifier when a public key is not obtained; and sending a registration request message to an access and mobility management function. The anonymous subscription concealed identifier includes anonymous domain information, anonymous user name information, and a routing indicator, the anonymous domain information indicates an identifier of a network to which an authentication device capable of authenticating a terminal device belongs, and the anonymous user name information is a default value. The registration request message includes the anonymous subscription concealed identifier.

In a possible design manner, the communication method provided in the sixth aspect may further include: performing an authentication procedure with an external authentication device, and generating a master key; receiving a non-access stratum security mode command message from the access and mobility management function, where the non-access stratum security mode command message includes an authentication success message; and in response to the authentication success message, generating an intermediate key based on the master key and a real subscription permanent identifier. The authentication success message indicates that the authentication on the terminal device succeeds. The real subscription permanent identifier includes real user name information, and the real user name information identifies the terminal device.

In a possible design manner, the communication method provided in the sixth aspect may further include: performing an authentication procedure with an external authentication device, and generating a master key; receiving a non-access stratum security mode command message from the access and mobility management function; in response to an authentication success message, generating terminal-side first verification information based on the master key, a real subscription permanent identifier, and a network-side counter value; determining whether the terminal-side first verification information is consistent with network-side first verification information; when the terminal-side first verification information is consistent with the network-side first verification information, generating terminal-side second verification information based on the master key, the real subscription permanent identifier, and a terminal-side counter value; and sending an N1 message to the access and mobility management function. The non-access stratum security mode command message includes the authentication success message, the network-side first verification information, and the network-side counter value, and the authentication success message indicates that the authentication on the terminal device succeeds. The real subscription permanent identifier includes real user name information, and the real user name information identifies the terminal device. The N1 message includes the terminal-side second verification information and the terminal-side counter value.

In a possible design manner, the generating terminal-side first verification information based on the master key, a real subscription permanent identifier, and a network-side counter value may include: generating an intermediate key based on the master key; and generating the terminal-side first verification information based on the intermediate key, the real subscription permanent identifier, and the network-side counter value.

In addition, for technical effect of the communication method according to the sixth aspect, refer to the technical effect of the communication system according to any possible implementation of the first aspect. Details are not described herein again.

According to a seventh aspect, a communication method is provided. The method includes: receiving a registration request message from a terminal device; sending an authentication request message to an authentication server function; receiving an authentication response message from the authentication server function; and when a non-access stratum security mode command procedure is successfully performed with the terminal device, sending an authentication result message to the authentication server function.

The registration request message includes an anonymous subscription concealed identifier, the anonymous subscription concealed identifier includes anonymous domain information, anonymous user name information, and a routing indicator, the anonymous domain information indicates an identifier of a network to which an authentication device capable of authenticating the terminal device belongs, and the anonymous user name information is a default value. The authentication request message includes the anonymous subscription concealed identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication result message includes the real subscription permanent identifier and authentication result indication information, and the authentication result indication information indicates that the authentication on the terminal device succeeds.

In addition, for technical effect of the communication method according to the seventh aspect, refer to the technical effect of the communication system according to any possible implementation of the first aspect. Details are not described herein again.

According to an eighth aspect, a communication method is provided. The method includes: receiving an authentication request message from an authentication server function; receiving a protocol response message from an external authentication device; determining whether anonymous domain information matches real domain information; and sending an authentication response message to the authentication server function when the real domain information matches the anonymous domain information. The authentication request message may include an anonymous subscription permanent identifier. The anonymous subscription permanent identifier includes the anonymous domain information. The protocol response message may include a real subscription permanent identifier, and may further include an authentication success message and/or a master key. The authentication response message may include authentication result indication information, and the authentication result indication information indicates that authentication on a terminal device succeeds.

In a possible design manner, an anonymous subscription concealed identifier further includes anonymous user name information and a routing indicator, and the anonymous user name information is a default value.

In addition, for technical effect of the communication method according to the eighth aspect, refer to the technical effect of the communication system according to any possible implementation of the first aspect. Details are not described herein again.

According to a ninth aspect, a communication apparatus is provided. The communication apparatus includes a processing module and a transceiver module. The transceiver module is configured to receive an authentication obtaining request message from an authentication server function. The processing module is configured to determine, based on anonymous domain information and configuration information, an authentication mode for authenticating a terminal device. The transceiver module is further configured to send an authentication obtaining response message to the authentication server function. The authentication obtaining request message includes an anonymous subscription concealed identifier, the anonymous subscription concealed identifier includes the anonymous domain information, and the anonymous domain information indicates an identifier of a network to which an authentication device capable of authenticating the terminal device belongs. The authentication mode includes an external authentication mode or an internal authentication mode, the configuration information includes an identifier of one or more networks corresponding to the external authentication mode and/or an identifier of one or more networks corresponding to the internal authentication mode. The authentication obtaining response message includes authentication indication information indicating the authentication mode.

In a possible design manner, when the identifier of the network to which the authentication device capable of authenticating the terminal device belongs matches the identifier of the one or more networks corresponding to the external authentication mode, the processing module is further configured to determine that the authentication mode for authenticating the terminal device is the external authentication mode. Alternatively, when the identifier of the network to which the authentication device capable of authenticating the terminal device belongs matches the identifier of the one or more networks corresponding to the internal authentication mode, the processing module is further configured to determine that the authentication mode for authenticating the terminal device is the internal authentication mode.

In a possible design manner, the authentication obtaining response message further includes an anonymous subscription permanent identifier, the anonymous subscription permanent identifier is determined based on the anonymous subscription concealed identifier, and the anonymous subscription permanent identifier includes the anonymous domain information.

In a possible design manner, the anonymous subscription concealed identifier further includes anonymous user name information and a routing indicator, and the anonymous user name information is a default value.

In a possible design manner, the transceiver module is further configured to receive an authentication result confirmation request message from the authentication server function.

The communication apparatus according to the ninth aspect may further include a storage module, where the storage module is configured to store a real subscription permanent identifier and authentication result indication information. The authentication result confirmation request message includes the real subscription permanent identifier and the authentication result indication information, and the authentication result indication information indicates that the authentication on the terminal device succeeds. The real subscription permanent identifier includes real user name information, and the real user name information identifies the terminal device.

It should be noted that the transceiver module according to the ninth aspect may include a receiving module and a sending module. The receiving module is configured to receive data and/or signaling from the authentication server function and/or another network element. The sending module is configured to send data and/or signaling to the authentication server function and/or the another network element. A specific implementation of the transceiver module is not specifically limited in this application.

Optionally, when the processing module executes a program or instructions, the communication apparatus according to the ninth aspect can perform the method according to the second aspect.

It should be noted that the communication apparatus according to the ninth aspect may be unified data management, or may be a chip (system) or another part or component that may be disposed in unified data management. This is not limited in this application.

In addition, for technical effect of the communication apparatus according to the ninth aspect, refer to the technical effect of the communication method according to any possible implementation of the second aspect. Details are not described herein again.

According to a tenth aspect, a communication apparatus is provided. The communication apparatus includes a processing module and a transceiver module. The transceiver module is configured to send an authentication obtaining request message to unified data management. The transceiver module is further configured to receive an authentication obtaining response message from the unified data management. The processing module is configured to send an authentication request message to a network slice-specific and standalone non-public network authentication and authorization function based on authentication indication information. The transceiver module is further configured to receive an authentication response message from the network slice-specific and standalone non-public network authentication and authorization function. The transceiver module is further configured to send an authentication result confirmation request message to the unified data management when real domain information matches anonymous domain information.

The authentication obtaining request message includes an anonymous subscription concealed identifier, the anonymous subscription concealed identifier includes the anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication result confirmation request message includes the real subscription permanent identifier and authentication result indication information, and the authentication result indication information indicates that the authentication on the terminal device succeeds.

In a possible design manner, the authentication response message further includes a master key. The processing module is further configured to generate an intermediate key based on the master key and the real subscription permanent identifier.

In a possible design manner, the anonymous subscription concealed identifier further includes anonymous user name information and a routing indicator, and the anonymous user name information is a default value.

It should be noted that the transceiver module according to the tenth aspect may include a receiving module and a sending module. The receiving module is configured to receive data and/or signaling from the network slice-specific and standalone non-public network authentication and authorization function, an access and mobility management function, the unified data management, and/or another network element. The sending module is configured to send data and/or signaling to the network slice-specific and standalone non-public network authentication and authorization function, the access and mobility management function, the unified data management, and/or the another network element. A specific implementation of the transceiver module is not specifically limited in this application.

Optionally, the communication apparatus according to the tenth aspect may further include a storage module, and the storage module stores a program or instructions. When the processing module executes the program or the instructions, the communication apparatus according to the tenth aspect is enabled to perform the method according to the third aspect.

It should be noted that the communication apparatus according to the tenth aspect may be an authentication server function, or may be a chip (system) or another part or component that may be disposed in an authentication server function. This is not limited in this application.

In addition, for technical effect of the communication apparatus according to the tenth aspect, refer to the technical effect of the communication method according to any possible implementation of the third aspect. Details are not described herein again.

According to an eleventh aspect, a communication apparatus is provided. The communication apparatus includes a processing module and a transceiver module. The transceiver module is configured to send an authentication obtaining request message to unified data management. The transceiver module is further configured to receive an authentication obtaining response message from the unified data management. The transceiver module is further configured to send an authentication request message to a network slice-specific and standalone non-public network authentication and authorization function based on authentication indication information. The transceiver module is further configured to receive an authentication response message from the network slice-specific and standalone non-public network authentication and authorization function. The processing module is configured to: in response to an authentication success message, generate network-side first verification information based on a master key, a real subscription permanent identifier, and a network-side counter value. The transceiver module is further configured to send the authentication response message to an access and mobility management function, where the authentication response message includes the authentication success message, the network-side first verification information, and the network-side counter value. The transceiver module is further configured to receive an authentication intermediate message from the access and mobility management function. The processing module is further configured to generate network-side second verification information based on the master key, the real subscription permanent identifier, and a terminal-side counter value. The processing module is further configured to determine whether terminal-side second verification information is consistent with the network-side second verification information. The transceiver module is further configured to: when the terminal-side second verification information is consistent with the network-side second verification information, send an authentication result confirmation request message to the unified data management.

Optionally, the authentication obtaining request message includes an anonymous subscription concealed identifier, the anonymous subscription concealed identifier includes anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes the real subscription permanent identifier, the authentication success message, and the master key, the real subscription permanent identifier includes real user name information, the real user name information identifies the terminal device, and the authentication success message indicates that the authentication on the terminal device succeeds. The authentication intermediate message includes the terminal-side second verification information and the terminal-side counter value. The authentication result confirmation request message includes the real subscription permanent identifier and authentication result indication information, and the authentication result indication information indicates that the authentication on the terminal device succeeds.

In a possible design manner, the anonymous subscription concealed identifier further includes anonymous user name information and a routing indicator, and the anonymous user name information is a default value.

In a possible design manner, the processing module is further configured to: generate an intermediate key based on the master key, and generate the network-side first verification information based on the intermediate key, the real subscription permanent identifier, and the network-side counter value.

It should be noted that the transceiver module according to the eleventh aspect may include a receiving module and a sending module. The receiving module is configured to receive data and/or signaling from the network slice-specific and standalone non-public network authentication and authorization function, the access and mobility management function, the unified data management, and/or another network element. The sending module is configured to send data and/or signaling to the network slice-specific and standalone non-public network authentication and authorization function, the access and mobility management function, the unified data management, and/or the another network element. A specific implementation of the transceiver module is not specifically limited in this application.

Optionally, the communication apparatus according to the eleventh aspect may further include a storage module, and the storage module stores a program or instructions. When the processing module executes the program or the instructions, the communication apparatus according to the eleventh aspect is enabled to perform the method according to the fourth aspect.

It should be noted that the communication apparatus according to the eleventh aspect may be an authentication server function, or may be a chip (system) or another part or component that may be disposed in an authentication server function. This is not limited in this application.

In addition, for technical effect of the communication apparatus according to the eleventh aspect, refer to the technical effect of the communication method according to any possible implementation of the fourth aspect. Details are not described herein again.

According to a twelfth aspect, a communication apparatus is provided. The communication apparatus includes a processing module and a transceiver module. The transceiver module is configured to send an authentication obtaining request message to unified data management. The transceiver module is further configured to receive an authentication obtaining response message from the unified data management. The processing module is configured to send an authentication request message to a network slice-specific and standalone non-public network authentication and authorization function based on authentication indication information. The transceiver module is further configured to receive an authentication response message from the network slice-specific and standalone non-public network authentication and authorization function. The transceiver module is further configured to send the authentication response message to an access and mobility management function. The transceiver module is further configured to receive an authentication result message from the access and mobility management function. The transceiver module is further configured to send an authentication result confirmation request message to the unified data management in response to authentication result indication information.

Optionally, the authentication obtaining request message includes an anonymous subscription concealed identifier, the anonymous subscription concealed identifier includes anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication response message includes the real subscription permanent identifier and/or the authentication success message. The authentication result message includes the authentication result indication information. The authentication result confirmation request message includes the real subscription permanent identifier and the authentication result indication information, and the authentication result indication information indicates that the authentication on the terminal device succeeds.

In a possible design manner, the authentication response message further includes a master key, and the processing module is further configured to generate an intermediate key based on the master key.

In a possible design manner, the anonymous subscription concealed identifier further includes anonymous user name information and a routing indicator, and the anonymous user name information is a default value.

It should be noted that the transceiver module according to the twelfth aspect may include a receiving module and a sending module. The receiving module is configured to receive data and/or signaling from the network slice-specific and standalone non-public network authentication and authorization function, the access and mobility management function, the unified data management, and/or another network element. The sending module is configured to send data and/or signaling to the network slice-specific and standalone non-public network authentication and authorization function, the access and mobility management function, the unified data management, and/or the another network element. A specific implementation of the transceiver module is not specifically limited in this application.

Optionally, the communication apparatus according to the twelfth aspect may further include a storage module, and the storage module stores a program or instructions. When the processing module executes the program or the instructions, the communication apparatus according to the twelfth aspect is enabled to perform the method according to the fifth aspect.

It should be noted that the communication apparatus according to the twelfth aspect may be an authentication server function, or may be a chip (system) or another part or component that may be disposed in an authentication server function. This is not limited in this application.

In addition, for technical effect of the communication apparatus according to the twelfth aspect, refer to the technical effect of the communication method according to any possible implementation of the fifth aspect. Details are not described herein again.

According to a thirteenth aspect, a communication apparatus is provided. The communication apparatus includes a processing module and a transceiver module. The processing module is configured to determine an anonymous subscription concealed identifier when a public key is not obtained. The transceiver module is configured to send a registration request message to an access and mobility management function. The anonymous subscription concealed identifier includes anonymous domain information, anonymous user name information, and a routing indicator, the anonymous domain information indicates an identifier of a network to which an authentication device capable of authenticating the communication apparatus belongs, and the anonymous user name information is a default value. The registration request message includes the anonymous subscription concealed identifier.

In a possible design manner, the processing module is further configured to: perform an authentication procedure with an external authentication device, and generate a master key. The transceiver module is configured to receive a non-access stratum security mode command message from the access and mobility management function, where the non-access stratum security mode command message includes an authentication success message. The processing module is further configured to generate an intermediate key based on the master key and a real subscription permanent identifier in response to the authentication success message. The authentication success message indicates that authentication on the communication apparatus succeeds. The real subscription permanent identifier includes real user name information, and the real user name information identifies the communication apparatus.

In a possible design manner, the processing module is further configured to: perform an authentication procedure with an external authentication device, and generate a master key. The transceiver module is configured to receive a non-access stratum security mode command message from the access and mobility management function. The processing module is further configured to: in response to an authentication success message, generate terminal-side first verification information based on the master key, a real subscription permanent identifier, and a network-side counter value. The processing module is further configured to determine whether the terminal-side first verification information is consistent with network-side first verification information. The processing module is further configured to: when the terminal-side first verification information is consistent with the network-side first verification information, generate terminal-side second verification information based on the master key, the real subscription permanent identifier, and a terminal-side counter value. The transceiver module is further configured to send an N1 message to the access and mobility management function.

The non-access stratum security mode command message includes the authentication success message, the network-side first verification information, and the network-side counter value, and the authentication success message indicates that authentication on the communication apparatus succeeds. The real subscription permanent identifier includes the real user name information, and the real user name information identifies the communication apparatus. The N1 message includes the terminal-side second verification information and the terminal-side counter value.

In a possible design manner, the processing module is further configured to: generate an intermediate key based on the master key, and generate the terminal-side first verification information based on the intermediate key, the real subscription permanent identifier, and the network-side counter value.

It should be noted that the transceiver module according to the thirteenth aspect may include a receiving module and a sending module. The receiving module is configured to receive data and/or signaling from the access and mobility management function and/or another network element. The sending module is configured to send data and/or signaling to the access and mobility management function and/or the another network element. A specific implementation of the transceiver module is not specifically limited in this application.

Optionally, the communication apparatus according to the thirteenth aspect may further include a storage module, and the storage module stores a program or instructions. When the processing module executes the program or the instructions, the communication apparatus according to the thirteenth aspect is enabled to perform the method according to the sixth aspect.

It should be noted that the communication apparatus according to the thirteenth aspect may be a terminal device, or may be a chip (system) or another part or component that may be disposed in the terminal device. This is not limited in this application.

In addition, for technical effect of the communication apparatus according to the thirteenth aspect, refer to the technical effect of the communication method according to any possible implementation of the sixth aspect. Details are not described herein again.

According to a fourteenth aspect, a communication apparatus is provided. The communication apparatus includes a receiving module and a sending module. The receiving module is configured to receive a registration request message from a terminal device. The sending module is further configured to send an authentication request message to an authentication server function. The receiving module is further configured to receive an authentication response message from the authentication server function. The sending module is further configured to: when a non-access stratum security mode command procedure is successfully performed with the terminal device, send an authentication result message to the authentication server function.

The registration request message includes an anonymous subscription concealed identifier, the anonymous subscription concealed identifier includes anonymous domain information, anonymous user name information, and a routing indicator, the anonymous domain information indicates an identifier of a network to which an authentication device capable of authenticating the terminal device belongs, and the anonymous user name information is a default value. The authentication request message includes the anonymous subscription concealed identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication result message includes the real subscription permanent identifier and authentication result indication information, and the authentication result indication information indicates that the authentication on the terminal device succeeds.

It should be noted that the receiving module and the sending module may be separately disposed, or may be integrated into one module, namely, a transceiver module. Specific implementations of the receiving module and the sending module are not specifically limited in this application.

Optionally, the communication apparatus according to the fourteenth aspect may further include a processing module and a storage module, and the storage module stores a program or instructions. When the processing module executes the program or the instructions, the communication apparatus according to the fourteenth aspect is enabled to perform the method according to the seventh aspect.

It should be noted that the communication apparatus according to the fourteenth aspect may be an access and mobility management function, or may be a chip (system) or another part or component that may be disposed in an access and mobility management function. This is not limited in this application.

In addition, for technical effect of the communication apparatus according to the fourteenth aspect, refer to the technical effect of the communication method according to any possible implementation of the seventh aspect. Details are not described herein again.

According to a fifteenth aspect, a communication apparatus is provided. The communication apparatus includes a processing module and a transceiver module. The transceiver module is configured to receive an authentication request message from an authentication server function. The transceiver module is further configured to receive a protocol response message from an external authentication device. The processing module is configured to determine whether anonymous domain information matches real domain information. The transceiver module is further configured to send an authentication response message to the authentication server function when the real domain information matches the anonymous domain information. The authentication request message may include an anonymous subscription permanent identifier. The anonymous subscription permanent identifier includes the anonymous domain information. The protocol response message may include a real subscription permanent identifier, and may further include an authentication success message and/or a master key. The authentication response message may include authentication result indication information, and the authentication result indication information indicates that authentication on a terminal device succeeds.

In a possible design manner, an anonymous subscription concealed identifier further includes anonymous user name information and a routing indicator, and the anonymous user name information is a default value.

It should be noted that the transceiver module according to the fifteenth aspect may include a receiving module and a sending module. The receiving module is configured to receive data and/or signaling from the authentication server function, the external authentication device, and/or another network element. The sending module is configured to send data and/or signaling to the authentication server function, the external authentication device, and/or the another network element. A specific implementation of the transceiver module is not specifically limited in this application.

Optionally, the communication apparatus according to the fifteenth aspect may further include a storage module, and the storage module stores a program or instructions. When the processing module executes the program or the instructions, the communication apparatus according to the fifteenth aspect is enabled to perform the method according to the eighth aspect.

It should be noted that the communication apparatus according to the fifteenth aspect may be a network slice-specific and standalone non-public network authentication and authorization function, or may be a chip (system) or another part or component that may be disposed in a network slice-specific and standalone non-public network authentication and authorization function. This is not limited in this application.

In addition, for technical effect of the communication apparatus according to the fifteenth aspect, refer to the technical effect of the communication method according to any possible implementation of the eighth aspect. Details are not described herein again.

According to a sixteenth aspect, a communication apparatus is provided. The communication apparatus includes a processor. The processor is coupled to a memory, and the memory is configured to store a computer program.

The processor is configured to execute the computer program stored in the memory, so that the communication method according to any one of the possible implementations of the second aspect to the eighth aspect is performed.

In a possible design, the communication apparatus according to the sixteenth aspect may further include a transceiver. The transceiver may be a transceiver circuit or an input/output port. The transceiver may be used by the communication apparatus to communicate with another device.

It should be noted that the input port may be configured to implement the receiving functions in the second aspect to the eighth aspect, and the output port may be configured to implement the sending functions in the second aspect to the eighth aspect.

In this application, the communication apparatus according to the sixteenth aspect may be an access and mobility management function, an authentication server function, unified data management, a network slice-specific and standalone non-public network authentication and authorization function, or a terminal device, or may be a chip or a chip system disposed in an access and mobility management function, an authentication server function, unified data management, a network slice-specific and standalone non-public network authentication and authorization function, or a terminal device.

In addition, for technical effect of the communication apparatus according to the sixteenth aspect, refer to the technical effect of the communication method according to any one of the implementations of the second aspect to the eighth aspect. Details are not described herein again.

According to a seventeenth aspect, a chip system is provided. The chip system includes a logic circuit and an input/output port. The logic circuit is configured to implement the processing functions in the second aspect to the eighth aspect, and the input/output port is configured to implement the sending and receiving functions in the second aspect to the eighth aspect. Specifically, the input port may be configured to implement the receiving functions in the second aspect to the eighth aspect, and the output port may be configured to implement the sending functions in the second aspect to the eighth aspect.

In a possible design, the chip system further includes a memory, and the memory is configured to store program instructions and data that implement functions in the second aspect to the eighth aspect.

The chip system may include a chip, or may include a chip and another discrete component.

According to an eighteenth aspect, a computer-readable storage medium is provided. The computer-readable storage medium includes a computer program or instructions. When the computer program or the instructions are run on a computer, the communication method according to any one of the possible implementations of the second aspect to the eighth aspect is performed.

According to a nineteenth aspect, a computer program product is provided. The computer program product includes a computer program or instructions. When the computer program or the instructions are run on a computer, the communication method according to any one of the possible implementations of the second aspect to the eighth aspect is performed.

**BRIEF DESCRIPTION OF DRAWINGS**

FIG. 1 is a schematic diagram of an architecture of a communication system according to an embodiment of this application;
FIG. 2 is a schematic diagram of an architecture of an SNPN network according to an embodiment of this application;
FIG. 3 is a schematic diagram of a NAS SMC procedure according to an embodiment of this application;
FIG. 4 is a schematic flowchart of a communication method according to an embodiment of this application;
FIG. 5A and FIG. 5B are a schematic flowchart of another communication method according to an embodiment of this application;
FIG. 6 is a schematic flowchart of still another communication method according to an embodiment of this application;
FIG. 7A and FIG. 7B are a schematic flowchart of yet another communication method according to an embodiment of this application;

FIG. 8 is a schematic diagram of a structure of a communication apparatus according to an embodiment of this application;

FIG. 9 is a schematic diagram of a structure of another communication apparatus according to an embodiment of this application; and

FIG. 10 is a schematic diagram of a structure of still another communication apparatus according to an embodiment of this application.

## DESCRIPTION OF EMBODIMENTS

The following describes technical solutions of this application with reference to accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may alternatively be used.

In addition, in embodiments of this application, the word such as "example" or "for example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, sometimes "of (of)", "corresponding (corresponding, relevant)", and "corresponding (corresponding)" may be mixed. It should be noted that when differences are not emphasized, meanings to be expressed are the same.

In embodiments of this application, sometimes, a subscript such as W1 may be incorrectly used as a non-subscript form such as $W_1$, and meanings to be expressed are consistent when differences are not emphasized.

A network architecture and a service scenario described in embodiments of this application are intended to describe the technical solutions in embodiments of this application more clearly, but do not constitute a limitation on the technical solutions provided in embodiments of this application. A person of ordinary skill in the art may know that with evolution of the network architecture and emergence of a new service scenario, the technical solutions provided in embodiments of this application are also applicable to a similar technical problem.

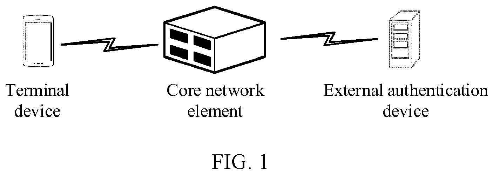

For ease of understanding of embodiments of this application, a communication system applicable to embodiments of this application is first described in detail by using a communication system shown in FIG. 1 as an example. For example, FIG. 1 is a schematic diagram of an architecture of the communication system to which communication methods provided in embodiments of this application are applicable.

As shown in FIG. 1, the communication system includes a terminal device and a core network element. There may be one or more core network elements. Optionally, the communication system may further include an external authentication device. There may be one or more external authentication devices. When there are a plurality of external authentication devices, each external authentication device belongs to a different network.

The terminal device is a terminal that accesses the communication system and has a wireless transceiver function, or a chip or a chip system that may be disposed in the terminal. The terminal device may also be referred to as user equipment (User Equipment, UE), a user apparatus, an access terminal, a subscriber unit, a subscriber station, a mobile station (mobile station, MS), a remote station, a remote terminal, a mobile device, a user terminal, a terminal, a terminal unit, a terminal station, a terminal apparatus, a wireless communication device, a user agent, or a user apparatus.

For example, the terminal device in embodiments of this application may be a mobile phone (mobile phone), a wireless data card, a personal digital assistant (personal digital assistant, PDA) computer, a laptop computer (laptop computer), a tablet computer (Pad), an unmanned aerial vehicle, a computer with a wireless transceiver function, a machine type communication (machine type communication, MTC) terminal, a virtual reality (virtual reality, VR) terminal device, an augmented reality (augmented reality, AR) terminal device, an internet of things (internet of things, IoT) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal (for example, a game machine, a smart television, a smart speaker, a smart refrigerator, or fitness equipment) in a smart home (smart home), a vehicle-mounted terminal, or an RSU having a terminal function. The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device (handset) with a wireless communication function, a computing device or another processing device connected to a wireless modem, a wearable device, or the like.

For another example, the terminal device in embodiments of this application may be an express delivery terminal (for example, a device that can monitor a location of a cargo vehicle, or a device that can monitor a temperature and humidity of cargo) in intelligent logistics, a wireless terminal (for example, a wearable device that can collect related data of poultry and livestock) in intelligent agriculture, a wireless terminal (for example, a smart elevator, a fire monitoring device, or a smart meter) in intelligent architecture, a wireless terminal (for example, a wearable device that can monitor a physiological status of a person or an animal) in intelligent healthcare, a wireless terminal (for example, an intelligent bus, an intelligent vehicle, a shared bicycle, a charging pile monitoring device, intelligent traffic lights, or an intelligent monitoring and intelligent parking device) in intelligent transportation, or a wireless terminal (for example, a vending machine, a self-service checkout machine, or an unmanned convenience store) in intelligent retail. For another example, the terminal device in this application may be an in-vehicle module, an in-vehicle assembly, an in-vehicle component, an in-vehicle chip, or an in-vehicle unit that is built in a vehicle as one or more parts or units. The vehicle may implement the methods provided in this application by using the in-vehicle module, the in-vehicle assembly, the in-vehicle component, the in-vehicle chip, or the in-vehicle unit that is built in the vehicle.

Optionally, the communication system shown in FIG. 1 is applicable to a currently discussed communication network, or is applicable to another future network, or the like. This is not specifically limited in embodiments of this application.

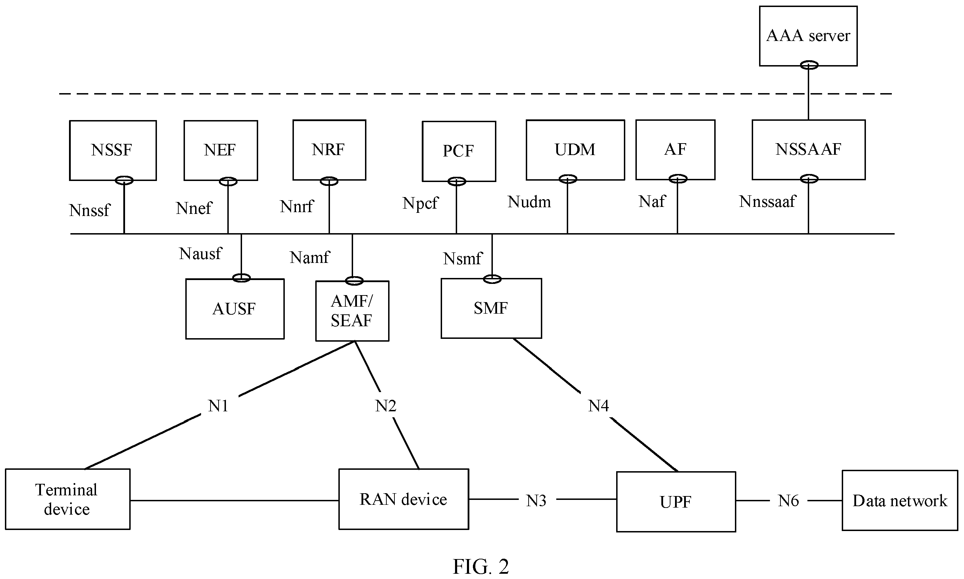

For example, the communication system shown in FIG. 1 is used in a standalone non-public network (standalone non-public network, SNPN). As shown in FIG. 2, the SNPN network may include a terminal device, a core network element, an AAA server, a (radio) access network ((radio) access network, (R)AN) device, and a data network (data network, DN).

For an implementation of the terminal device, refer to the descriptions of the terminal device in FIG. 1. Optionally, the terminal device may store a long-term key and a related function. When performing bidirectional authentication with the core network element (for example, an AMF network element or an AUSF network element), the terminal device may use the long-term key and the related function to verify network authenticity.

For example, the core network element may include but is not limited to one or more of the following: a user plane function (user plane function, UPF) network element, the access and mobility management function (core access and mobility management function, AMF)/a security anchor function (security anchor function, SEAF) network element, a session management function (session management function, SMF) network element, the authentication server function (authentication server function, AUSF) network element, a network slice selection function (network slice selection function, NSSF) network element, a network exposure function (network exposure function, NEF) network element, a network function repository function (network exposure function Repository Function, NRF), a policy control function (policy control function, PCF) network element, a unified data management (unified data management, UDM) network element, an application function (application function, AF) network element, and a network slice-specific and standalone non-public network authentication and authorization function (network slice-specific and SNPN authentication and authorization function, NSSAAF) network element. The terminal device accesses a 5G network via the RAN device, and the terminal device communicates with the AMF through an N1 interface (N1 for short). The RAN device communicates with the AMF through an N2 interface (N2 for short). The RAN device communicates with the UPF through an N3 interface (N3 for short). The SMF communicates with the UPF through an N4 interface (N4 for short), and the UPF accesses the data network through an N6 interface (N6 for short).

In addition, control plane functions such as the AUSF, the AMF/SEAF, the SMF, the NSSF, the NEF, the NRF, the PCF, the UDM, the NSSAAF, or the AF shown in FIG. 2 interact with each other through service-based interfaces. For example, a service-based interface exhibited by the AUSF is Nausf; the AMF and the SEAF may be co-deployed, and a service-based interface exhibited by the AMF is Namf; a service-based interface exhibited by the SMF is Nsmf; a service-based interface exhibited by the NSSF is Nnssf; a service-based interface exhibited by the NEF is Nnef; a service-based interface exhibited by the NRF is Nnrf; a service-based interface exhibited by the PCF is Npcf; a service-based interface exhibited by the UDM is Nudm; a service-based interface exhibited by the NSSAAF is Nnssaaf; and a service-based interface exhibited by the AF is Naf.

The AMF network element is mainly responsible for signaling processing, for example, functions such as access control, mobility management, attachment and detachment, and gateway selection. When providing services for sessions in the terminal device, the AMF network element provides control plane storage resources for the sessions, to store session identifiers, SMF network element identifiers associated with the session identifiers, and the like. The AMF may further obtain a 5G NAS security context, where the 5G NAS security context is used to protect a NAS message.

The SMF network element is responsible for user plane network element selection, user plane network element redirection, internet protocol (internet protocol, IP) address assignment, bearer establishment, modification, and release, quality of service (quality of service, QoS) control, and the like.

The UPF network element is responsible for forwarding and receiving user data in the terminal device. The UPF network element may receive the user data from the data network, and transmit the user data to the terminal device through the RAN device. The UPF network element may alternatively receive the user data from the terminal device through the RAN device, and forward the user data to the data network. Transmission resources and scheduling functions that are used by the UPF network element to provide services for the terminal device are managed and controlled by the SMF network element.

The AUSF network element supports 3GPP and non-3GPP access authentication. The NSSF network element is mainly responsible for network slice selection, and may determine, based on slice selection assistance information, subscription information, and the like of the terminal device, a network slice instance that is allowed to access by the terminal device. The NSSF network element may be configured to assist a network in verifying whether UE is real. In an internal authentication scenario, the AUSF network element may authenticate the terminal device.

The NEF network element mainly supports secure interaction between a 3GPP network and a third-party application. The NRF network element supports registration and discovery of network functions. The PCF network element is responsible for policy control decision, and may provide a traffic-based charging control function and a policy rule of a control plane function.

The UDM network element is mainly responsible for managing subscription data of the terminal device, including storing and managing a terminal device identifier, authorizing access of the terminal device, and the like.

The AF network element mainly supports interacting with a 3GPP core network to provide a service, for example, affecting a data routing decision-making and a policy control function, or providing some third-party services for a network side.

The NSSAAF network element is mainly used to connect to an external AAA server, perform a function of conversion between a service-based interface (service-based interface, SBI) and an AAA interface, and is an intermediate network element connecting an internal network element of the 3GPP network and the external AAA server. For example, a correspondence between address information of the AAA server and domain information is pre-configured in the NSSAAF. After the NSSAAF receives the domain information, the NSSAAF may determine the AAA server based on the address information of the AAA server, and then send a received message to the AAA server. For another example, the NSSAAF may request address information of the AAA server from a domain name server (domain name server, DNS) based on domain information, obtain the address information of the AAA server from the DNS server, and then send a received message to the AAA server.

The external authentication device shown in FIG. 1 may be the AAA server shown in FIG. 2. The external authentication device may be referred to as the AAA server, an authentication server, or the like. The external authentication device may store a credential of a user, and the credential may be used to authenticate an identity of a terminal device. The external authentication device may be configured to: process an access request of a terminal device, provide verification and authentication and account services, manage user access to a network server, and provide a service for a terminal device with an access right.

An access network device is a device that is located on a network side of the communication system and that has a wireless transceiver function, or a chip or a chip system that may be disposed in the device. The access network device includes but is not limited to an access point (access point, AP), for example, a home gateway, a router, a server, a switch, or a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP, or transmission point, TP), or the like in a wireless fidelity (wireless fidelity, Wi-Fi) system. The access network device may alternatively be a gNB or a transmission point (TRP or TP) in a 5G system, for example, a new radio (new radio, NR) system, or one antenna panel or a group of antenna panels (including a plurality of antenna panels) of a base station in a 5G system. The access network device may alternatively be a network node constituting a gNB or a transmission point, for example, a baseband unit (BBU), a distributed unit (distributed unit, DU), or a roadside unit (roadside unit, RSU) having a base station function. The access network device may alternatively be a satellite, or a base station in various forms in the future

It should be noted that the communication method provided in embodiments of this application may be used between any two nodes shown in FIG. 1 and FIG. 2, for example, between the terminal device and the core network element, between a plurality of core network elements, or between the core network element and the AAA server. For specific implementation, refer to the following method embodiments, and details are not described herein.

It should be noted that the solutions in embodiments of this application may alternatively be applied to another communication system, and a corresponding name may also be replaced with a name of a corresponding function in the another communication system.

It should be understood that FIG. 1 is merely a simplified schematic diagram of an example for ease of understanding. The communication system may further include another network device and/or another terminal device that are/is not shown in FIG. 1.

To make embodiments of this application clearer, the following uniformly describes some content and concepts related to embodiments of this application.

1. Subscription concealed identifier (subscription concealed identifier, SUCI) and subscription permanent identifier (subscription permanent identifier, SUPI)

This application includes two types of SUCIs: a real subscription concealed identifier (which may be briefly referred to as a real SUCI) and an anonymous subscription concealed identifier (which may be briefly referred to as an anonymous SUCI), and includes two types of SUPIs: a real subscription permanent identifier (which may be briefly referred to as a real SUPI) and an anonymous subscription permanent identifier (which may be briefly referred to as an anonymous SUPI).

It should be noted that the real subscription concealed identifier may be referred to as a real subscription concealed identifier, a non-anonymized subscription concealed identifier, or the like, and the anonymous subscription concealed identifier may be referred to as an anonymous subscription concealed identifier, or the like. Similarly, the real subscription permanent identifier may be referred to as a real subscription permanent identifier, a non-anonymized subscription permanent identifier, or the like, and the anonymous subscription permanent identifier is referred to as an anonymous subscription permanent identifier, or the like. The related names are not limited in this application.

The real SUCI may be generated after a terminal device performs encryption and integrity protection on the real SUPI based on a pre-configured public key. When the terminal device does not have the pre-configured public key, the terminal device may generate the real SUCI according to a null-scheme (null-scheme).

For example, formats of the SUCI may include a network access identifier (network access identifier, NAI) format and an international mobile subscriber identity (international mobile subscriber identity, IMSI) format. For example, formats of the SUPI may include formats such as the NAI format and the IMSI format.

If a format of the SUPI is the IMSI format, a format of an SUCI corresponding to the SUPI may be the IMSI format or the NAI format, which is related to a specific application scenario. If a format of the SUPI is not the IMSI format, a format of an SUCI corresponding to the SUPI may be the NAI format.

In some embodiments, the real SUCI may include user name information and domain information. The real SUPI may include user name information and domain information. The anonymous SUCI may include only domain information, and optionally, may further include user name information. The anonymous SUPI may include only domain information, and optionally, may further include user name information. Domain information included in a real SUCI, a real SUPI, an anonymous SUPI, and an anonymous SUCI of a same terminal device/user is the same, and user name information of the real SUCI, the real SUPI, the anonymous SUPI, and the anonymous SUCI is generally different (formats are different and/or meanings indicated by the information are different). Specifically, both user name information included in the real SUCI and the real SUPI may be used to identify the terminal device, but formats of the real SUCI and the real SUPI may be different (for details, refer to TS23.003 28.7.2 and 28.7.3). For example, user name information in the real SUCI may be obtained by mapping user name information in the real SUPI. The user name information in the anonymous SUCI is generally different from that in the real SUCI/real SUPI. For a relationship between the anonymous SUCI and the anonymous SUPI, refer to descriptions in the following embodiments of this application.

For ease of description, in the following embodiments of this application, anonymous domain information is the domain information carried in the anonymous SUPI or the anonymous SUCI. Real domain information is the domain information carried in the real SUPI or the real SUCI. Anonymous user name information is user information carried in the anonymous SUPI or the anonymous SUCI. Real user name information is user information carried in the real SUPI or the real SUCI.

Specifically, the user name information of the anonymous SUCI may include one or more of the following: a routing indicator (routing indicator, RID), function information, and a default value. The RID information may be a default value or not a default value.

Domain information may include home network information of a user, and may be used by a related network element/functional entity to determine a network in which subscription data corresponding to user name information is located. For example, the domain information indicates an identifier of a network to which an authentication device capable of authenticating a terminal device belongs. The real user name information may be used to identify the terminal device, for example, indicate a unique identity of the terminal device. The anonymous user name information may be used to transfer some necessary information, or to ensure that a format of the anonymous SUCI/anonymous SUPI is the same as that of the real SUCI/real SUPI, so that a network side can parse the anonymous SUCI/anonymous SUPI. For example, the network side may determine whether an SUCI is an anonymous SUCI or a real SUCI based on user name information in the SUCI.

Specifically, when the anonymous SUCI is in the NAI format, namely, a username@realm format, the username (user name information) part may include one or more of the following: the RID information, the function information, and the default value.

When the RID information is not a default value, an AMF network element may determine an AUSF network element based on the RID information, and the AUSF network element may determine a UDM network element based on the RID information. When the RID information is a default value, an AMF network element or an AUSF network element requests an NRF network element for an AUSF network element or a UDM network element, and the NRF network element returns the AUSF network element or the UDM network element corresponding to RID information of the default value.

For example, the function information may indicate a usage scenario of the anonymous SUCI, and/or indicate whether the SUCI is a real SUCI or an anonymous SUCI, for example, indicate that the anonymous SUCI is used in a scenario in which an external authentication device authenticates the terminal device, or is used in an SNPN network. For example, the anonymous SUCI may be in the following format: SNPN@realm, external@realm, ANY@realm, or anonymous @realm. The "anonymous (anonymous, ANY)" indicates that the SUCI is an anonymous SUCI.

For example, a default value may be used to supplement a relevant bit representing a real identity. For example, if a username of the real SUCI is constituted by type<supi type>.rid<routing indicator>.schid<protection scheme id>.userid<MSIN or Network Specific Identifier SUPI username>, the default value is used to fill in a userid part.

For example, the real SUPI in the NAI format may be 234150999999999@wlan.mnc015.mcc234.3gppnetwork.org, where wlan.mnc015.mcc234.3gppnetwork.org is home network information of a user. Optionally, the anonymous SUCI may not include the user name information. In this case, the anonymous SUCI is the domain information (realm), or may include the domain information part and an @ symbol, for example, @realm. For example, the anonymous SUCI may be @wlan.mnc015.mcc234.3gppnetwork.org or wlan.mnc015.mcc234.3gppnetwork.org (in other words, the @ symbol is not included). When the anonymous SUCI does not include the user name information, the anonymous SUCI may be specifically an SUCI formed by retaining only a realm part of the real SUCI after the real SUCI is generated according to the null-scheme.

The anonymous SUCI may alternatively include anonymous user name information, and the anonymous user information may be set to a default value. For example, the anonymous SUCI may be 000000000000000@wlan.mnc015.mcc234.3gppnetwork.org (in other words, the user name information part is filled with default values 0 with quantity same as a quantity of bits. Certainly, the user name information part may alternatively be filled with other agreed default values).

In some embodiments, the information (the RID information, the function information and/or the default value) that constitutes the anonymous SUCI may be combined with each other. When the information is combined, a connector may be used or may not be used. For example, the anonymous SUCI may be SNPNRID@realm. For example, when the RID information and the default value are combined, the anonymous SUCI may be RID@realm. For example, when the function information and the default value are combined, the anonymous SUCI may be SNPN@realm. For example, when the connector is ".", the anonymous SUCI may be SNPN.RID@realm. Examples are not enumerated in this application.

In some embodiments, the user name information included in the anonymous SUPI may include one or more of the following: RID information, function information, a counter value, and a default value. The RID information may be a default value or not a default value.

For example, the anonymous SUPI in the NAI format may be RID@realm.

For example, the function information may indicate a usage scenario of the anonymous SUPI, and/or indicate whether the SUPI is a real SUPI or an anonymous SUPI, for example, indicate that the anonymous SUPI is used in the scenario in which the external authentication device authenticates the terminal device, or used in the SNPN network. For example, the anonymous SUPI in the NAI format may be SNPN@realm, external @realm, ANY@realm, or anonymous @realm. The "ANY" indicates that the SUPI is an anonymous SUPI.

For example, the counter value may be a value of a counter, the counter value may be an integer greater than or equal to 0, and the anonymous SUPI may be identified by using the counter value. For example, one counter may be maintained for all home networks, so that different anonymous SUPIs may be allocated to different home networks. Alternatively, a counter may be maintained for each home network. In this way, a finer granularity can be implemented provided that uniqueness of anonymous SUPIs for a same home network is ensured. A size or a length of the counter value is not limited in this application. For example, the counter may be constituted by 32 bits, and finally an integer or a 32-bit binary number may be output. An initial value of the counter is 0 and is increased by 1 each time the counter is used.

For example, when one counter is maintained for all the home networks, the anonymous SUPIs may be 0@realm#1, 1@realm#2, and 3@realm#1, where realm# 1 and realm#2 indicate two different home networks. The three counter values indicate that an anonymous SUPI with a counter value of 0 is allocated to a network of realm#1, an anonymous SUPI with a counter value of 1 is then allocated to a network of realm#2, and an anonymous SUPI with a counter value of 3 is finally allocated to the network of realm#1. For another example, when a counter is maintained for each home network, the anonymous SUPIs may be 0@realm#1, 0@realm#2, and 1@realm#1, where realm# 1 and realm#2 indicate two different home networks. The three counter values indicate that an anonymous SUPI with a counter value of 0 is allocated to a network of realm#1, an anonymous SUPI with a counter value of 0 is then allocated to a network of realm#2, and an anonymous SUPI with a counter value of 1 is finally allocated to the network of realm#1.

For example, the user name information of the anonymous SUPI may be the default value. The default value may be used to supplement a relevant bit representing a real identity. For example, the anonymous SUPI in the NAI format may be username@realm, where the username part is the default value. For example, if the default value is 0, a format of the anonymous SUPI is 0@realm or 00000000@realm, where 00000000 indicates the username includes eight digits. A quantity of digits 0 is not limited in this application.

In some embodiments, the information (the RID information, the function information, the counter value, and/or the default value) that constitutes the anonymous SUPI may be combined with each other. When the information is combined, a connector may be used or may not be used. For example, the anonymous SUPI may be SNPNRID@realm, 1RID@realm, or 2SNPN@realm. For example, when the RID information and the default value are combined, the anonymous SUPI may be RID@realm. For example, when the function information and the default value are combined, the anonymous SUPI may be SNPN@realm. For example, when the connector is ".", the anonymous SUPI may be SNPN.RID@realm, SNPN.RID.1@realm, SNPN.1.RID@realm, SNPN.2@realm, ANY 1@realm, or SNPN. ANY. 1@realm. Examples are not enumerated in this application.

2. Authentication mode and authentication device

For example, the authentication mode is a mode in which the authentication device authenticates a terminal device. The authentication mode may include an external authentication mode or an internal authentication mode. Authentication devices may be classified into an external authentication device and an internal authentication device.

For example, the external authentication mode may be a mode in which the terminal device is authenticated by using the external authentication device. The external authentication device and an AUSF network element that provides a network service for the terminal device belong to different networks, for example, an AAA server.

For example, the internal authentication mode may be a mode in which the terminal device is authenticated by using the internal authentication device. The internal authentication device and the terminal device belong to a same network, for example, the AUSF network element.

3. Authentication success message and authentication result indication information

For example, the authentication success message may indicate that authentication on a terminal device succeeds. In this application, after successfully authenticating the terminal device, an external authentication device generates the authentication success message, and sends the authentication success message to an AUSF through an NSSAAF, for example, an extensible authentication protocol (extensible authentication protocol, EAP) success (success) message.

For example, the authentication result indication information indicates whether authentication on the terminal device succeeds or fails. For example, when a network side considers that the terminal device is real (for example, a real subscription permanent identifier used in a process in which the external authentication device performs authentication is the same as a real subscription permanent identifier of the terminal device. For another example, the AUSF determines that the authentication on the terminal device succeeds based on the authentication success message. For another example, the AUSF successfully authenticates the terminal device), the AUSF generates the authentication result indication information. In this application, the authentication result indication information is generated by the AUSF and sent to UDM.

A format or expression form of the authentication result indication information is different from that of the authentication success message. The authentication result indication information may be in an information format that can be recognized by the UDM. For example, "1" indicates that authentication succeeds.

4. Network-side first verification information, network-side second verification information, terminal-side first verification information, and terminal-side second verification information

In the network-side first verification information, the network-side second verification information, the terminal-side first verification information, and the terminal-side second verification information, the "network side" is determined by a network element (for example, an AUSF) on the network side, and the "terminal side" is determined by a terminal device. The words "first" and "second" do not limit a quantity and an execution sequence.

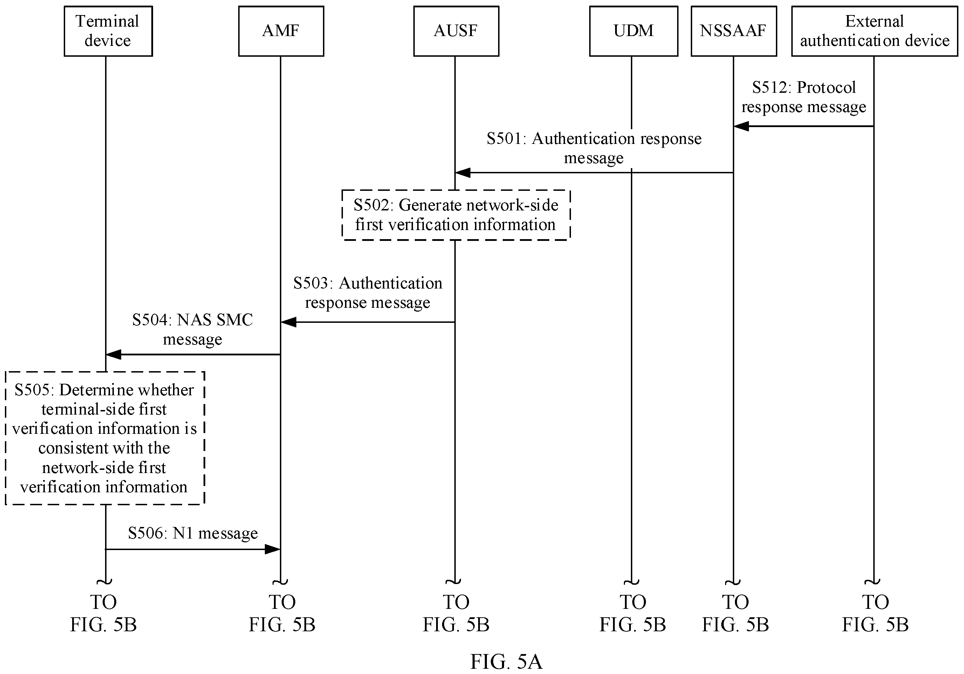

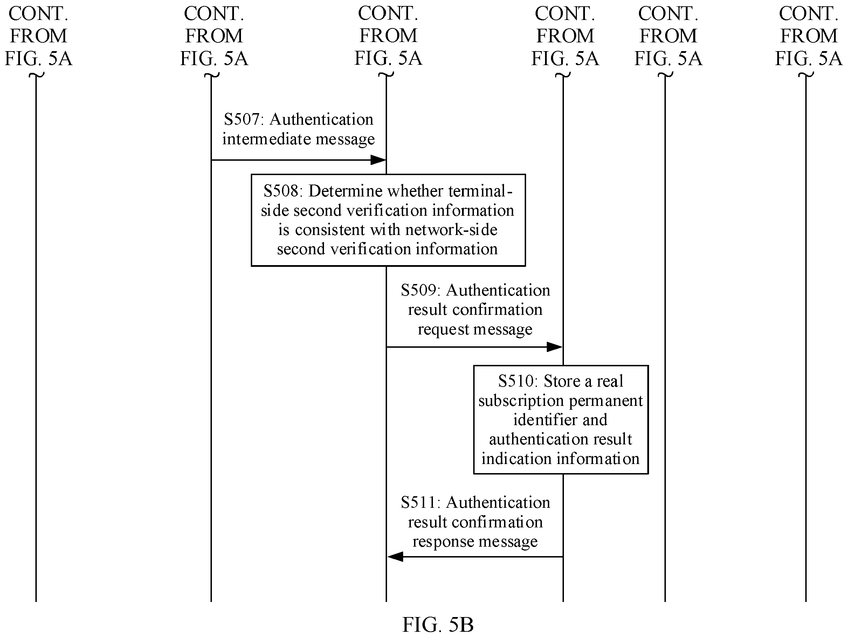

For example, the network-side first verification information and the network-side second verification information are verification information determined by the AUSF. The terminal-side first verification information and the terminal-side second verification information are verification information determined by the terminal device. For a specific determining method, refer to the following communication method shown in FIG. 5A and FIG. 5B.

In this application, the terminal device determines whether the network side is real by determining whether the network-side first verification information is consistent with the terminal-side first verification information. If the network-side first verification information is consistent with the terminal-side first verification information, the terminal device considers that the network side is real. The AUSF determines whether the terminal device is real by determining whether the terminal-side second verification information is consistent with the network-side second verification information. If the terminal-side second verification information is consistent with the network-side second verification information, the AUSF considers that the terminal device is real. In this way, two-way authentication between the terminal device and the network side can be completed.

Alternatively, the terminal device may determine whether the network side is real based on whether an authentication success message is received. If the authentication success message is received, the terminal device considers that the network side is real. The authentication success message indicates that the terminal device is successfully authenticated. When this manner is used, a step of generating the network-side first verification information by the AUSF, and steps of generating the terminal-side first verification information by the terminal device and comparing whether the network-side first verification information is consistent with the terminal-side first verification information by the terminal device may not be performed. Based on a case that the AUSF determines whether the terminal-side second verification information is consistent with the network-side second verification information, two-way authentication between the terminal device and the network side can be completed.

This application provides a solution of mutual authentication between the terminal device and the network side.

For example, whether a domain information part of an anonymous SUPI is the same as a domain information part of a real SUPI may be determined based on whether the domain information part of the anonymous SUPI matches the domain information part of the real SUPI, and then whether user name information is the same is determined by generating an intermediate key based on the real SUPI.

Matching means that the domain information parts are completely the same or that a mapping relationship exists between the domain information parts. For example, the domain information part of the anonymous SUPI is an FQDN #1, and the domain information part of the real SUPI is an FQDN #2. When the FQDN #1 is mapped to or associated with or the same as the FQDN #2, it is considered that the FQDN #1 matches FQDN #2. Therefore, the anonymous SUPI is the same as the real SUPI.

For another example, mutual authentication between the terminal device and the network side is implemented by determining whether terminal-side verification information is the same as network-side verification information. The terminal-side verification information is determined based on the real SUPI and a key, and the network-side verification information is determined based on a real SUPI corresponding to a credential used in an authentication process on the network side and the key. If the terminal-side verification information is the same as the network-side verification information, it indicates that the real SUPI corresponding to the credential used in the authentication process on the network side is the same as the real SUPI of the terminal. In this way, two-way authentication between the terminal device and the network side can be completed. The terminal device considers that the network is real, and the network considers that the terminal device is real.

For another example, a non-access stratum (non-access stratum, NAS) security mode command (security mode command, SMC) procedure is performed after an authentication procedure, to implement mutual authentication between the terminal device and the network side. The NAS SMC procedure is performed after the authentication procedure. If the NAS SMC procedure succeeds, it can be learned that the real SUPI corresponding to the credential used in the authentication process on the network side is the same as the real SUPI of the terminal. For details, refer to the following descriptions in 5 and 6.

5. Generation of a key Kamf

For example, the key Kamf may be generated based on a key Kseaf, parameters FC, P0, L0, L1, and the like as inputs of a key derivation function (key derivation function, KDF), and a length of Kseaf may be 256 bits. The key Kseaf may be generated based on a key Kausf.

For example, FC=0x6D, P0=IMSI or NAI or GCI or GLI, L0 represents a length of P0, and L1 represents a length of P1.

P0 represents a value (value) of a real SUPI, and the SUPI value is used as an input parameter and participates in generating the key Kamf. SUPI=SUPI type+SUPI value. The SUPI value includes the IMSI, the NAI, the GCI, and the GLI. The SUPI type includes an IMSI type and an NSI type. P0 indicates that only the SUPI value is used, excluding the SUPI type.

Thus, the SUPI value in the SUPI participates in generating the key Kamf.

6. NAS SMC procedure

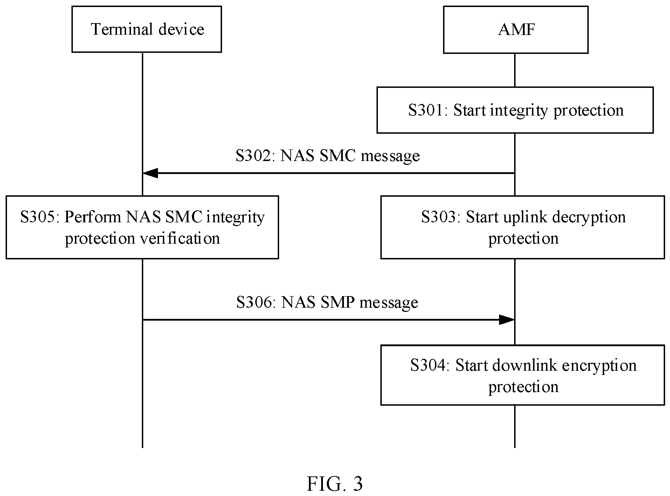

FIG. 3 is a schematic diagram of a NAS SMC procedure according to an embodiment of this application.

As shown in FIG. 3, the communication method includes the following steps.

S301: An AMF network element starts integrity protection.

S302: The AMF network element sends a NAS SMC message to a terminal device. Correspondingly, the terminal device receives the NAS SMC message from the AMF network element.

For example, the NAS SMC message may include information elements such as a key identifier (for example, a key identifier in 5G (key set identifier in 5G, 5G ngKSI)), and/or capability information of the terminal device.

For example, the NAS SMC message indicates to perform security protection based on a key corresponding to the key identifier.

S303: The AMF network element starts uplink decryption protection.

S304: The AMF network element starts downlink encryption protection.

S305: The terminal device performs NAS SMC integrity protection verification.

S306: After integrity protection verification succeeds, the terminal device sends a NAS security mode complete (security mode complete, SMP) message to the AMF network element. Correspondingly, the AMF network element receives the NAS SMP message from the terminal device.

For example, the NAS SMC procedure may be used to activate a key. In this application, the NAS SMC procedure may be performed after a primary authentication procedure (refer to S409). In the primary authentication procedure, each of the AMF network element and the terminal device may generate a new key Kausf (for example, generated in S705). An SUPI value in the SUPI participates in generating a key Kamf. A key Kseaf is generated based on the key Kausf. Further, the key Kamf is generated based on the key Kseaf, and a new NAS key (for example, an integrity protection key KNASint or an encryption protection key KNASenc) is generated based on the new Kausf. The new NAS key is activated by using the NAS SMC procedure. When performing integrity verification on the NAS SMP message and successfully decrypting the NAS SMP message, the AMF network element determines that the NAS SMC procedure is successfully performed with the terminal device.

The NAS SMC procedure can be successfully completed only when a NAS key of the terminal device is the same as a NAS key of the AMF network element. Therefore, it can be learned that because the NAS SMC procedure succeeds, the terminal device and the AMF network element have a same real SUPI. A real SUPI of the AMF network element is received from an AUSF network element (refer to S703). Therefore, a real SUPI of the terminal device is the same as the real SUPI of the AUSF network element.

In the primary authentication procedure, the AMF network element may generate a key identifier ngKSI (for example, generated in S704). The AMF network element may send the NAS SMC message including the ngKSI in the NAS SMC procedure.

In a conventional technology, a NAS SMC procedure is not necessarily performed after a primary authentication procedure. This means that although a new key Kausf is generated in the primary authentication procedure, the new key Kausf is not activated and the new key is not used because the NAS SMC procedure is not performed. In this case, a terminal device and an AMF network element continue to use a currently used key.

It should be noted that the currently used key may not be a key generated in a previous primary authentication procedure because the NAS SMC procedure may not be performed after the previous primary authentication procedure.

Therefore, the currently used key is not directly related to whether the primary authentication procedure is performed, but related to whether the NAS SMC procedure is performed, and related to a key identifier carried in a NAS SMC message.

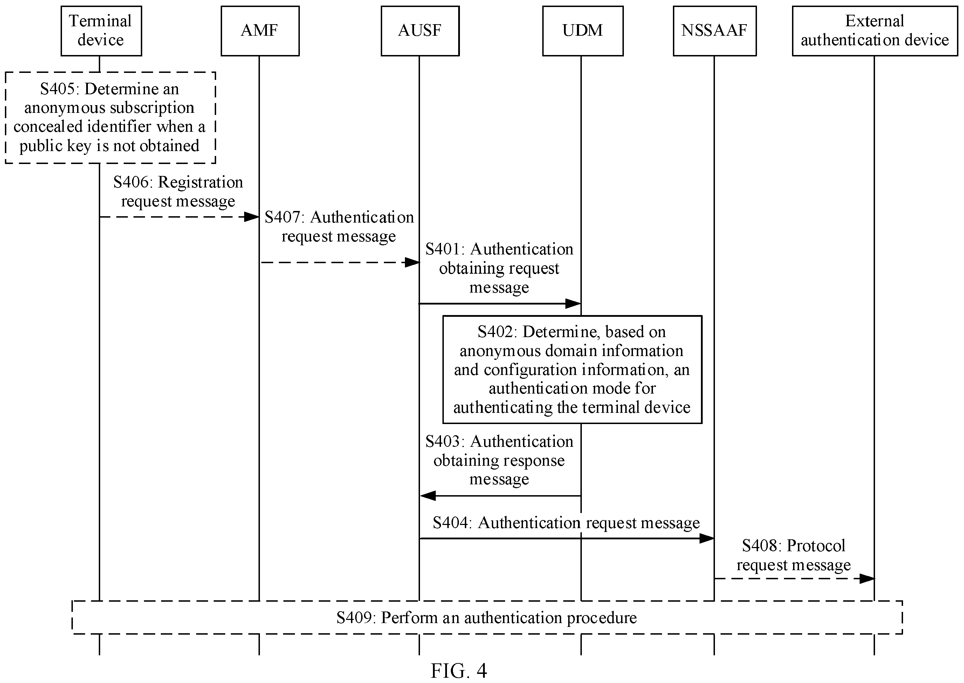

The following describes in detail the communication methods provided in embodiments of this application with reference to FIG. 4 to FIG. 7B. FIG. 4 to FIG. 7B are described by using the AUSF, the AMF, the UDM, and the NSSAAF shown in FIG. 2 as examples. The communication methods provided in this application may be further applied to other network architectures and future network architectures in various forms. Corresponding names may also be replaced with names of corresponding functions in the other network architectures and the future network architectures in various forms.

For example, FIG. 4 is a schematic flowchart of a communication method according to an embodiment of this application.

As shown in FIG. 4, the communication method includes the following steps.

S401: An AUSF sends an authentication obtaining request message to UDM. Correspondingly, the UDM receives the authentication obtaining request message from the AUSF.

For example, the authentication obtaining request message may include an anonymous subscription concealed identifier.

For example, the anonymous subscription concealed identifier includes anonymous domain information, and the anonymous domain information may indicate an identifier of a network to which an authentication device capable of authenticating a terminal device belongs. Optionally, the anonymous subscription concealed identifier may further include anonymous user name information and a routing indicator, and the anonymous user name information is a default value. For a specific implementation of the anonymous subscription concealed identifier, refer to the foregoing descriptions of the anonymous SUCI. Details are not described herein again.

In some embodiments, when RID information is not a default value, the AUSF may send the authentication obtaining request message to the UDM based on the RID information.

In a possible design manner, the communication method provided in this embodiment of this application may further include: S405: The terminal device determines the anonymous subscription concealed identifier when a public key is not obtained.

In other words, the anonymous subscription concealed identifier is determined by the terminal device.

For example, the terminal device determines whether RID information stored in a universal subscriber identity module (universal subscriber identity module, USIM) or mobile equipment (mobile equipment, ME) of the terminal device is a default value. If the RID information is the default value, the generated anonymous subscription concealed identifier may not include the RID information. If the RID information is not the default value, the generated anonymous subscription concealed identifier carries the RID information, for example, RID@realm.

For example, if the anonymous subscription concealed identifier does not include the RID information, an AMF or the AUSF requests an NRF for an AUSF or UDM, and the NRF returns the AUSF or the UDM corresponding to RID information of the default value.

In this way, the RID information is set for selecting the AUSF or the UDM. The RID information may be preset in a USIM card or the terminal device, or may be delivered by the UDM to the terminal device through over-the-air (over-the-air, OTA) or by using another procedure. In an SNPN external authentication scenario, an SNPN network may preset different RID information for different terminal devices. For example, an RID #1 is provided for a terminal device whose credential is stored in UDM of the SNPN network, and an RID #2 is provided for a terminal device that uses external authentication, namely, a terminal device that uses an external authentication device. In this case, the external authentication device stores the credential used when authenticating the terminal device.

The RID #1 and the RID #2 may be used to select different AUSFs and different UDMs. Specifically, an AUSF #1 and UDM #1 may be selected based on the RID #1, and an AUSF #2 and UDM#2 may be selected based on the RID #2. The AUSF #1 and the AUSF #2 may be two different instances (instances) or two different functional entities. The same applies to the UDM #1 and the UDM #2. In this way, internally and externally used network elements can be securely isolated, thereby preventing a same AUSF and/or UDM from serving both an internal user and an external user. The same AUSF and/or UDM serve/serves both the internal user and the external user, which may increase an attack surface. For example, an attacker may arbitrarily construct anonymous SUCIs and continuously initiate authentication procedures to occupy resources of the AUSF. As a result, the resources of the AUSF may be exhausted, and the AUSF cannot serve both the internal user and the external user. In a case of security isolation, the attacker does not affect resources of the AUSF that serves the internal user. Therefore, the SNPN network can still serve the internal user well.

In a possible design manner, the communication method provided in this embodiment of this application may further include: S406: The terminal device sends a registration request message to the AMF. Correspondingly, the AMF receives the registration request message from the terminal device.

For example, with reference to FIG. 2, the AMF may be the AMF/SEAF. The AMF is used as an example for description in this application.

Optionally, the registration request message may include the anonymous subscription concealed identifier.

For example, the registration request message may be used to request a registration procedure to the SNPN network.

In a possible design manner, the communication method provided in this embodiment of this application may further include: S407: The AMF sends an authentication request message to the AUSF. Correspondingly, the AUSF receives the authentication request message from the AMF.

Optionally, the authentication request message may include the anonymous subscription concealed identifier.

In other words, the anonymous subscription concealed identifier may be sent by the terminal device to the AUSF through the AMF.

Optionally, the authentication request message may further include a serving network (serving network, SN) name (name).

For example, the SN name indicates a network in which the AMF is located. When authenticating the terminal device, the UDM may use the SN name as an input parameter.

In some embodiments, when the RID information is not the default value, the AMF may send the authentication request message to the AUSF based on the RID information.

S402: The UDM determines, based on the anonymous domain information and configuration information, an authentication mode for authenticating the terminal device.

It should be noted that the UDM and the AUSF may be a same network element, and functions of the UDM and the AUSF may be performed by a same network element, for example, both are performed by the AUSF, or both are performed by an NSSAAF. Alternatively, when no UDM is deployed in a network, a function is performed by the AUSF. This is not limited in this application. In this case, a step of interaction between the UDM and the AUSF may be omitted.

For example, the authentication mode may include an external authentication mode or an internal authentication mode.

For example, the anonymous domain information may indicate the identifier of the network to which the authentication device capable of authenticating the terminal device belongs. When the anonymous domain information includes a plurality of domain names, it indicates that the SNPN network supports interaction with authentication devices in a plurality of different networks to authenticate the terminal device.

For example, the configuration information may include an identifier of one or more networks corresponding to the external authentication mode, and/or an identifier of one or more networks corresponding to the internal authentication mode. For example, the configuration information may include a domain name of the one or more networks corresponding to the external authentication mode, and/or a domain name of the one or more networks corresponding to the internal authentication mode.

For example, a format of the domain name may be a fully qualified domain name (fully qualified domain name, FQDN). This is not limited in this application.

For another example, a format of embedded information in the configuration information may be a same format as a realm in an anonymous SUCI.

Optionally, the configuration information may further include authentication indication information, and the authentication indication information corresponds to an identifier of a network. For example, an identifier of each network corresponds to one piece of authentication indication information. For another example, identifiers of a plurality of networks correspond to one piece of authentication indication information. For example, identifiers of some networks correspond to authentication indication information indicating the external authentication mode, and identifiers of the other networks correspond to authentication indication information indicating the internal authentication mode.

In some embodiments, the configuration information may be stored in subscription data of the terminal device, may be stored in subscription data of a network corresponding to an identifier (for example, a domain name) of the network, or may be separately stored in the UDM for serving all anonymous SUCIs or anonymous SUPIs.

Optionally, the configuration information may be pre-configured in the UDM.

For example, the authentication indication information may indicate the authentication mode.

Optionally, when the authentication indication information indicates that the authentication mode is internal authentication, the authentication indication information may indicate an authentication method, and the authentication indication information may further carry a parameter that needs to be used for authentication, for example, a certificate that needs to be used for authentication.

For example, the authentication method indicates a specific authentication method. For example, the authentication method may include an extensible authentication protocol-transport layer security (extensible authentication protocol-transport level security, EAP-TLS) authentication method and an EAP-tunneled transport layer security (EAP-tunneled transport layer security, EAP-TTLS) authentication method.

In a possible design manner, S402 may include step 1 and/or step 2. Step 1 and step 2 may be used independently, or may be used together. Step 1 may be performed before step 2 is performed, or step 2 may be performed before step 1 is performed. A sequence of step 1 and step 2 is not limited.

Step 1: When the identifier of the network to which the authentication device capable of authenticating the terminal device belongs matches the identifier of the one or more networks corresponding to the external authentication mode, determine that the authentication mode for authenticating the terminal device is the external authentication mode; or when the identifier of the network to which the authentication device capable of authenticating the terminal device belongs matches the identifier of the one or more networks corresponding to the internal authentication mode, determine that the authentication mode for authenticating the terminal device is the internal authentication mode.

For example, matching means that network identifiers are the same, or a mapping relationship exists between network identifiers.

For example, a network identifier #1 stored in the configuration information may be a network name #1, and the anonymous domain information in the anonymous SUCI includes the network name 1 and other information. It may be considered that the network identifier #1 stored in the configuration information matches the anonymous domain information. The network name #1 may be understood as the identifier of the network to which the authentication device belongs.

For example, the network identifier #1 stored in the configuration information may be a network identifier #1, and the network identifier may be a character string indicating a name of an external network. If the configuration information includes the network name #1 and the other information, the UDM may determine whether unidirectional or bidirectional mapping can be performed between the network name #1 and the network identifier #1, for example, whether the network identifier #1 can be obtained based on the network name #1. If the network identifier #1 can be obtained based on the network name #1, it may be considered that the network name #1 matches the network identifier #1. The network identifier #1 may be understood as the identifier of the network to which the authentication device belongs.

For example, the configuration information includes that a network identifier 1, a network identifier 2, and a network identifier 3 correspond to the external authentication mode, and a network identifier 4, a network identifier 5, and a network identifier 6 correspond to the internal authentication mode. If the anonymous domain information includes the network identifier 1, it is determined that the authentication mode for authenticating the terminal device is the external authentication mode. If the anonymous domain information includes the network identifier 5, it is determined that the authentication mode for authenticating the terminal device is the internal authentication mode.

Step 2: The UDM determines whether the identifier of the network indicated by the anonymous domain information is the same as an identifier of a network to which the UDM belongs.

If the identifier of the network indicated by the anonymous domain information is the same as the identifier of the network to which the UDM belongs, it is determined that the authentication mode for authenticating the terminal device is the internal authentication mode.

For a case in which step 1 and step 2 are used together, an example in which step 1 is performed before step 2 is used. For example, the UDM performs step 1, and may not perform step 2 if the authentication mode (for example, internal authentication or external authentication) can be determined. If the authentication mode cannot be determined (for example, the identifier of the network indicated by the anonymous domain information does not match the identifier of the one or more networks in the configuration information), step 2 is performed. If the identifier of the network indicated by the anonymous domain information is the same as the identifier of the network to which the UDM belongs in step 2, it is determined that the authentication mode is internal authentication, and the authentication method may be further determined. It should be noted that after the authentication mode is determined in step 1, step 2 may still be performed. This is not limited in this application.

For another example, if the identifier of the network indicated by the anonymous domain information does not match the identifier of the one or more networks in the configuration information, and the identifier of the network indicated by the anonymous domain information is different from the identifier of the network to which the UDM belongs, the UDM aborts an authentication procedure. The UDM may not process the message or send a failure message to the AUSF. For example, the failure message may indicate a registration failure. This is not specifically limited in embodiments of this application. Aborting the authentication procedure indicates that an anonymized SUCI is not authorized to access the network.

It should be noted that an example in which step 2 is performed before step 1 is similar to the foregoing example in which step 1 is performed before step 2. Refer to the example in which step 1 is performed before step 2. Details are not described herein again.

In a possible implementation, step 1 is first performed: The UDM determines whether the identifier of the network indicated by the anonymous domain information is the same as the identifier of the network to which the UDM belongs. If the identifier of the network indicated by the anonymous domain information is the same as the identifier of the network to which the UDM belongs, it is determined that the authentication mode for authenticating the terminal device is the internal authentication mode. For example, when the identifier of the network to which the authentication device capable of authenticating the terminal device belongs matches the identifier of the one or more networks corresponding to the internal authentication mode, it is determined that the authentication mode for authenticating the terminal device is the internal authentication mode. If the identifier of the network indicated by the anonymous domain information is different from the identifier of the network to which the UDM belongs, step 2 is performed: When the identifier of the network to which the authentication device capable of authenticating the terminal device belongs matches the identifier of the one or more networks corresponding to the external authentication mode, it is determined that the authentication mode for authenticating the terminal device is the external authentication mode.

In a possible design manner, the UDM may determine, based on a subscription concealed identifier, the mode for authenticating the terminal device. For example, when the subscription concealed identifier received by the UDM is anonymous, the UDM determines to authenticate the terminal device in the external authentication mode. When the subscription concealed identifier received by the UDM is real, the UDM determines to authenticate the terminal device in the internal authentication mode.

S403: The UDM sends an authentication obtaining response message to the AUSF. Correspondingly, the AUSF receives the authentication obtaining response message from the UDM.

For example, the authentication obtaining response message may include the authentication indication information indicating whether the authentication mode is internal authentication or external authentication. For an implementation of the authentication indication information, refer to S402. Details are not described herein again.

In other words, the UDM may send a specific authentication mode to the AUSF, for example, perform authentication in the external authentication mode, or perform authentication in the internal authentication mode, may send certificate information used for authentication, or may send a specific authentication method, for example, the EAP-TLS authentication method or the EAP-TTLS authentication method. In this way, the AUSF may obtain the authentication mode, and may further obtain the specific authentication method and/or the parameter that needs to be used for authentication.

In a possible design manner, the authentication obtaining response message may further include an anonymous subscription permanent identifier.

Optionally, the anonymous subscription permanent identifier may be determined by the UDM based on the anonymous subscription concealed identifier, and the anonymous subscription permanent identifier may include the anonymous domain information.

It should be noted that a sequence of determining the anonymous subscription permanent identifier by the UDM and determining the authentication indication information by the UDM is not limited in embodiments of this application. For example, the authentication indication information may be determined first, and then the anonymous subscription permanent identifier is determined when the authentication indication information indicates that the authentication mode for authenticating the terminal device is the external authentication mode. For another example, the anonymous subscription permanent identifier may be determined first, and then the authentication indication information is determined.

For example, optionally, the authentication indication information is determined based on subscription data corresponding to the anonymous subscription permanent identifier. It should be noted that, in this case, the subscription data corresponding to the anonymous subscription permanent identifier may be subscription data at a granularity of the network to which the external authentication device belongs. That is, all anonymous subscription permanent identifiers of the network use same subscription data at this moment.

For example, domain information of the anonymous subscription permanent identifier is the same as domain information of the anonymous subscription concealed identifier, for example, both are anonymous domain information.

In some embodiments, the anonymous subscription permanent identifier may further include the anonymous user name information, and the anonymous user name information includes one or more of the following: RID information, function information, a counter value, and a default value.

Optionally, the RID information may be the same as the RID information of the anonymous subscription concealed identifier.

Optionally, the function information may indicate a usage scenario of the anonymous subscription permanent identifier.

It should be noted that for a specific implementation of the anonymous subscription permanent identifier, refer to the foregoing descriptions of the anonymous SUPI. Details are not described herein again.

S404: The AUSF sends an authentication request message to the NSSAAF based on the authentication indication information. Correspondingly, the NSSAAF receives the authentication request message from the AUSF.

For example, the authentication request message may be used to request to authenticate the terminal device.

Optionally, when the authentication indication information indicates that the authentication mode is external authentication, the authentication request message is sent to the NSSAAF, to trigger the NSSAAF to request a first device to authenticate the terminal device. When the authentication indication information indicates that the authentication mode is internal authentication, an authentication request message is sent to the AMF, to indicate the AMF to perform internal authentication on the terminal device.

In some embodiments, the authentication request message may include the anonymous subscription permanent identifier. Therefore, the external authentication device may authenticate the terminal device based on the anonymous subscription permanent identifier.

In a possible design manner, S404 may include step 3 and step 4.

Step 3: When the authentication indication information indicates that the authentication mode is external authentication, the AUSF sends the authentication request message to the NSSAAF.

In other words, when it is determined that external authentication is used, the message is sent to the NSSAAF to request authentication on the terminal device.

Step 4: When the authentication indication information indicates that the authentication mode is internal authentication, the AUSF sends the authentication request message to the AMF.

In other words, when it is determined that internal authentication is used, the message is sent to the AMF to start performing internal authentication.

It should be noted that similar descriptions such as "step 1" and "step 2" in this application do not indicate an execution sequence.

In a possible design manner, the communication method provided in this embodiment of this application may further include: S408: The NSSAAF sends a protocol request message to the external authentication device. Correspondingly, the external authentication device receives the protocol request message from the NSSAAF.

Optionally, the protocol request message may include the anonymous subscription permanent identifier, or may include the anonymous domain information and does not include information other than the anonymous domain information in the anonymous subscription permanent identifier.

Optionally, the NSSAAF may select an external authentication device from one or more external authentication devices based on the anonymous domain information of the anonymous subscription permanent identifier, and send a protocol request message to the external authentication device.

For example, the anonymous domain information indicates the identifier of the network to which the authentication device capable of authenticating the terminal device belongs. For example, if the anonymous domain information indicates the network identifier 4, the NSSAAF selects an external authentication device belonging to a network corresponding to the network identifier 4, and sends a protocol request message to the external authentication device, to request to authenticate the terminal device.

In a possible design manner, the communication method provided in this embodiment of this application may further include S409: The external authentication device performs an authentication procedure with the terminal device, or the AUSF performs an authentication procedure on the terminal device.

In other words, S409 is a process of authenticating the terminal device, and is not specifically described in this application.

Optionally, the terminal device performs an authentication procedure with the external authentication server, and generates a master key (master key, MSK).

Based on the communication method shown in FIG. 4, the UDM receives the anonymous subscription concealed identifier including the anonymous domain information, where the anonymous domain information indicates the identifier of the network to which the authentication device capable of authenticating the terminal device belongs, and determines the authentication indication information based on the anonymous domain information and the configuration information. The authentication indication information indicates the authentication mode, and the configuration information includes the identifier of the one or more networks corresponding to the external authentication mode and/or the identifier of the one or more networks corresponding to the internal authentication mode. In this way, the mode for authenticating the terminal device may be successfully determined.

FIG. 5A and FIG. 5B are a schematic flowchart of another communication method according to an embodiment of this application. FIG. 5A and FIG. 5B may be used in combination with FIG. 4. After authentication between the external authentication device and the terminal device in step S409 succeeds, the communication method shown in FIG. 5A and FIG. 5B may be performed.

As shown in FIG. 5A and FIG. 5B, the communication method includes the following steps.

S501: The NSSAAF sends an authentication response message to the AUSF. Correspondingly, the AUSF receives the authentication response message from the NSSAAF.

Optionally, the authentication response message may include a real subscription permanent identifier, an authentication success message, and/or a master key MSK.

For example, the real subscription permanent identifier is identity information corresponding to a credential used in a process in which the external authentication device performs authentication.

In some embodiments, the real subscription permanent identifier may include real domain information and real user name information. For a specific implementation of the real subscription permanent identifier, refer to the foregoing implementation of the real SUPI. Details are not described herein again.

Optionally, the real domain information may indicate a domain name of a network to which the credential used in the process in which the external authentication device performs authentication belongs. Optionally, the real user name information identifies the terminal device. For example, the real user name information may indicate a unique identity of the terminal device.

In other words, the external authentication device authenticates the terminal device based on the real subscription permanent identifier, and considers that the real subscription permanent identifier is a real SUPI of the terminal device.

For example, the authentication success message may indicate that the authentication on the terminal device succeeds. For example, the authentication success message indicates that authentication in S409 succeeds.

For example, the master key MSK is a key generated during authentication between the external authentication device and the terminal device. A method for applying for the master key MSK varies with different authentication methods. A method for generating the master key MSK is not limited in embodiments of this application.

In a possible design manner, the communication method provided in this embodiment of this application may further include: S512: The external authentication device sends a protocol response message to the NSSAAF. Correspondingly, the NSSAAF receives the protocol response message from the external authentication device.

Optionally, the protocol response message may include the real subscription permanent identifier, and may further include the authentication success message and/or the master key MSK.

In other words, the real subscription permanent identifier, the authentication success message, and/or the master key MSK may be sent by the external authentication device to the AUSF through the NSSAAF.

S502: In response to the authentication success message, the AUSF generates network-side first verification information based on the master key, the real subscription permanent identifier, and a network-side counter value.

In a possible design manner, S502 may include step 5 and step 6.

Step 5: The AUSF generates an intermediate key Kausf based on the master key.

For a specific implementation of the master key MSK, refer to S501. Details are not described herein again.

Step 6: The AUSF generates the network-side first verification information based on the intermediate key Kausf and the real subscription permanent identifier.

For example, the AUSF may determine the network-side first verification information based on at least two of the intermediate key Kausf, function information, the real subscription permanent identifier, and the network-side counter value.

Optionally, the function information indicates a usage scenario of the real subscription permanent identifier, for example, used in an SNPN network and SUPI authentication (authentication). The function information may be a character string.

Optionally, the network-side counter value is an integer greater than or equal to 0, and an initial network-side counter value may be 0. For example, the AUSF may locally maintain a counter, and the network-side counter value is a value currently stored in the counter locally maintained by the AUSF. Each time network-side first verification information is calculated, a value of the counter is increased by 1. For another example, the network-side counter value may be a random number.

For example, the determined network-side first verification information may be calculated according to the following formula (1):

$$\text{SNPN\_MACI\_AUSF} = \text{KDF (Kausf\_1, first input parameter, second input parameter)}$$

$$(1)$$

In the foregoing formula (1), the first input parameter is the real subscription permanent identifier, and the second input parameter is optional. The second input parameter may be one or more input parameters. For example, the second input parameter is the function information and/or the network-side counter value.

In the foregoing formula (1), SNPN_MACI_AUSF is the network-side first verification information. For example, a MAC value is obtained by filling SNPN_MACI_AUSF. SNPN_MACI_AUSF represents a MAC value calculated by the AUSF in an SNPN network scenario. Kausf_1 is the intermediate key Kausf. KDF() represents a key derivation function (key derivation function, KDF).

S503: The AUSF sends an authentication response message to the AMF. Correspondingly, the AMF receives the authentication response message from the AUSF.

Optionally, the authentication response message may include the network-side first verification information, the authentication success message, the network-side counter value, and/or the intermediate key Kseaf.

For example, when S502 is performed to obtain the network-side first verification information, the authentication success message, and/or the network-side counter value, the AUSF may send the network-side first verification information, the authentication success message, and/or the network-side counter value to the AMF, to send the network-side first verification information, the authentication success message, and/or the network-side counter value to the terminal device through the AMF. The intermediate key Kseaf may be generated by the AUSF.

Optionally, the AUSF may generate the intermediate key Kausf based on the master key, and generate the intermediate key Kseaf based on the intermediate key Kausf.

S504: The AMF sends a NAS SMC message to the terminal device. Correspondingly, the terminal device receives the NAS SMC message from the AMF.

Optionally, the NAS SMC message may include the network-side first verification information, the authentication success message, and/or the network-side counter value.

S505: The terminal device determines whether terminal-side first verification information is consistent with the network-side first verification information.

If the network-side first verification information is the same as the terminal-side first verification information, the terminal device determines that the real subscription permanent identifier is the same as a real subscription permanent identifier, the identity information corresponding to the credential used in the process in which the external authentication device performs authentication is the same as identity information corresponding to a credential of the terminal device, and the terminal device determines that the AUSF is real. Otherwise, the real subscription permanent identifier is different from the real subscription permanent identifier, the terminal device determines that the AUSF is fake, and the real subscription permanent identifier used in the process in which the external authentication device performs authentication is not the real SUPI of the terminal device. That the AUSF is real or fake is equivalent to that the terminal device considers that the accessed network is real or fake.

In a possible design manner, the communication method provided in this embodiment of this application may further include: In response to the authentication success message, the terminal device generates the terminal-side first verification information based on the master key, the real subscription permanent identifier, and the network-side counter value.

In some embodiments, that the terminal device generates the terminal-side first verification information based on the master key, the real subscription permanent identifier, and the network-side counter value may include step 7 and step 8.

Step 7: The terminal device generates the intermediate key Kausf based on the master key.

Optionally, the master key may be generated by the terminal device in the authentication procedure in S409.

Step 8: The terminal device generates the terminal-side first verification information based on the intermediate key Kausf, the real subscription permanent identifier, and the network-side counter value.

In some embodiments, the terminal-side first verification information may be determined by the terminal device based on at least two of the intermediate key, the function information, the real subscription permanent identifier, and the network-side counter value.

Optionally, the intermediate key Kausf may be generated based on the master key MSK.

Optionally, the function information indicates the usage scenario of the real subscription permanent identifier, for example, used in the SNPN network and SUPI authentication (authentication). The function information may be the character string.

In some embodiments, the real subscription permanent identifier may include the real domain information and the real user name information, and the real user name information identifies the terminal device. For a specific implementation of the real subscription permanent identifier, refer to the foregoing implementation of the real SUPI. Details are not described herein again.

Optionally, for an implementation of the network-side counter value, refer to S502. Details are not described herein again.

For example, the determined terminal-side first verification information may be calculated according to the formula (1). The terminal-side first verification information is represented by XSNPN_MACI_AUSF, and a MAC value may be obtained by filling XSNPN_MACI_AUSF. XSNPN_MACI_AUSF represents a MAC value expected by the terminal device in the SNPN network scenario. The first input parameter is the real subscription permanent identifier.

It should be noted that, when the authentication response message includes the real subscription permanent identifier, the communication method shown in FIG. 5A and FIG. 5B may include S502 to S505. The AUSF may send the network-side first verification information and the network-side counter value to the terminal device through the AMF, and the terminal device may determine whether the network-side first verification information is the same as the terminal-side first verification information.

When the authentication response message includes the authentication success message, the communication method shown in FIG. 5A and FIG. 5B may include S503 and S504. In this case, the AUSF may send the authentication success message to the terminal device through the AMF, and the terminal device may learn, based on the authentication success message, that the AUSF is real, and perform S506. The step of generating the network-side first verification information by the AUSF, and the steps of generating the terminal-side first verification information by the terminal device and comparing whether the network-side first verification information is consistent with the terminal-side first verification information by the terminal device may not be performed.

In other words, the terminal device may determine, based on the network-side first verification information and the terminal-side first verification information, whether the AUSF is real, or may determine, based on whether authentication succeeds, whether the AUSF is real. If authentication succeeds, the AUSF is real. If the authentication fails, the AUSF is not real.

S506: The terminal device sends an N1 message to the AMF. Correspondingly, the AMF receives the N1 message from the terminal device.

Optionally, the N1 message may include terminal-side second verification information and/or a terminal-side counter value.

In a possible design manner, the communication method provided in this embodiment of this application may further include: The terminal device generates the terminal-side second verification information based on the master key, the real subscription permanent identifier, and the terminal-side counter value.

Optionally, the terminal-side counter value may be different from the network-side counter value used to generate the terminal-side first verification information.

For example, when the terminal-side first verification information is consistent with the network-side first verification information, the terminal device generates the terminal-side second verification information based on the master key and the real subscription permanent identifier. Correspondingly, the terminal device determines, based on the network-side first verification information and the terminal-side first verification information, whether the AUSF is real.

For another example, when receiving the authentication success message, the terminal device generates the terminal-side second verification information based on the master key, the real subscription permanent identifier, and the terminal-side counter value. Correspondingly, the terminal device determines whether the AUSF is real by checking whether authentication succeeds.

For example, that the terminal device generates the terminal-side second verification information based on the master key, the real subscription permanent identifier, and the terminal-side counter value may include: The terminal device generates the intermediate key Kausf based on the master key, and generates the terminal-side second verification information based on the intermediate key Kausf, the real subscription permanent identifier, and the terminal-side counter value.

In some embodiments, the terminal-side second verification information may be determined by the terminal device based on at least two of the intermediate key, the function information, the real subscription permanent identifier, and the terminal-side counter value.

It should be noted that for implementations of the intermediate key, the function information, and the real subscription permanent identifier, refer to S505. Details are not described herein again.

For example, the terminal-side counter value is an integer greater than or equal to 0, and an initial terminal-side counter value may be 0. For example, the terminal device may locally maintain a counter, and the terminal-side counter value is a value currently stored in the counter locally maintained by the terminal device. Each time terminal-side second verification information is calculated, a value of the counter is increased by 1. For another example, the terminal-side counter value may be a random number.

For example, the determined terminal-side second verification information may be calculated according to the formula (1). The terminal-side second verification information may be represented by SNPN_MACI_UE, and a MAC value may be obtained by filling SNPN_MACI_UE. SNPN_MACI_UE represents a MAC value calculated by the terminal device in the SNPN network scenario. The first input parameter is the real subscription permanent identifier. When the terminal device receives the network-side first verification information, the function information may include confirmation or a response to receiving the network-side first verification information.

S507: The AMF sends an authentication intermediate message to the AUSF. Correspondingly, the AUSF receives the authentication intermediate message from the AMF.

Optionally, the authentication intermediate message may include the terminal-side second verification information and/or the terminal-side counter value.

S508: The AUSF determines whether the terminal-side second verification information is consistent with network-side second verification information.

If the terminal-side second verification information is the same as the network-side second verification information, the AUSF determines that the real subscription permanent identifier is the same as the real subscription permanent identifier, the identity information corresponding to the credential used in the process in which the external authentication device performs authentication is the same as the identity information corresponding to the credential of the terminal device, and the AUSF determines that the terminal device is real. Otherwise, the real subscription permanent identifier is different from the real subscription permanent identifier, and the AUSF determines that the terminal device is fake.

In a possible design manner, the communication method provided in this embodiment of this application may further include: The AUSF generates the network-side second verification information based on the master key, the real subscription permanent identifier, and the terminal-side counter value.

For example, that the AUSF generates the network-side second verification information based on the master key, the real subscription permanent identifier, and the terminal-side counter value may include: The AUSF generates the intermediate key Kausf based on the master key, and generates the network-side second verification information based on the intermediate key Kausf, the real subscription permanent identifier, and the terminal-side counter value.

In some embodiments, the network-side second verification information may be determined by the AUSF based on at least two of the intermediate key Kausf, the function information, the real subscription permanent identifier, and the terminal-side counter value.

It should be noted that for implementations of the intermediate key Kausf and the function information, refer to S502. For an implementation of the terminal-side counter value, refer to S506. Details are not described herein again.

For example, the network-side second verification information may be calculated according to the formula (1). The network-side second verification information may be represented by XSNPN_MACI_UE, and XSNPN_MACI_UE represents a MAC value expected by the AUSF in the SNPN network scenario. The first input parameter is the real subscription permanent identifier. When the terminal device receives the network-side first verification information, the function information may include confirmation or the response to receiving the network-side first verification information.

In this way, two-way authentication between the terminal device and a network side can be completed. The terminal device considers that the network is real, and the network considers that the terminal device is real.

S509: When the terminal-side second verification information is consistent with the network-side second verification information, the AUSF sends an authentication result confirmation request message to the UDM. Correspondingly, the UDM receives the authentication result confirmation request message from the AUSF.

Optionally, the authentication result confirmation request message may include the real subscription permanent identifier, authentication result indication information, and/or an anonymous subscription permanent identifier. The authentication result indication information indicates that the authentication on the terminal device succeeds, and the authentication result indication information indicates that a primary authentication procedure succeeds. Correspondingly, the UDM records, based on the indication information, that the authentication on the terminal device succeeds.

S510: The UDM stores the real subscription permanent identifier and the authentication result indication information.

Optionally, the UDM may store the real subscription permanent identifier, the authentication result indication information, and/or the anonymous subscription permanent identifier.

For example, after generating the anonymous subscription permanent identifier (refer to S403), the UDM may create an entry for the anonymous subscription permanent identifier, to record whether subsequent authentication based on the anonymous subscription permanent identifier succeeds. Therefore, after receiving the real subscription permanent identifier, the UDM may directly store the real subscription permanent identifier into the entry, or replace the anonymous subscription permanent identifier with the real subscription permanent identifier, or directly store the real subscription permanent identifier into the entry and delete the anonymous subscription permanent identifier.

Alternatively, the UDM does not create the entry for the anonymous subscription permanent identifier. After receiving the authentication result confirmation request message, the UDM creates the entry, where the entry may include the real subscription permanent identifier, and optionally, may further include the anonymous subscription permanent identifier.

In some embodiments, the UDM may request, from an external network, subscription data corresponding to the anonymous subscription permanent identifier for use by a network in which the UDM is located, or the UDM may use public subscription data of an external network as subscription data corresponding to the anonymous subscription permanent identifier.

S511: The UDM sends an authentication result confirmation response message to the AUSF. Correspondingly, the AUSF receives the authentication result confirmation response message from the UDM.

Based on the communication method shown in FIG. 5A and FIG. 5B, it is determined, by determining whether terminal-side verification information is the same as network-side verification information, whether a real subscription permanent identifier used for authentication is the same as a real subscription permanent identifier of the terminal device. In this way, two-way authentication between the terminal device and the network side can be completed. The terminal device considers that the network is real, and the network considers that the terminal device is real.

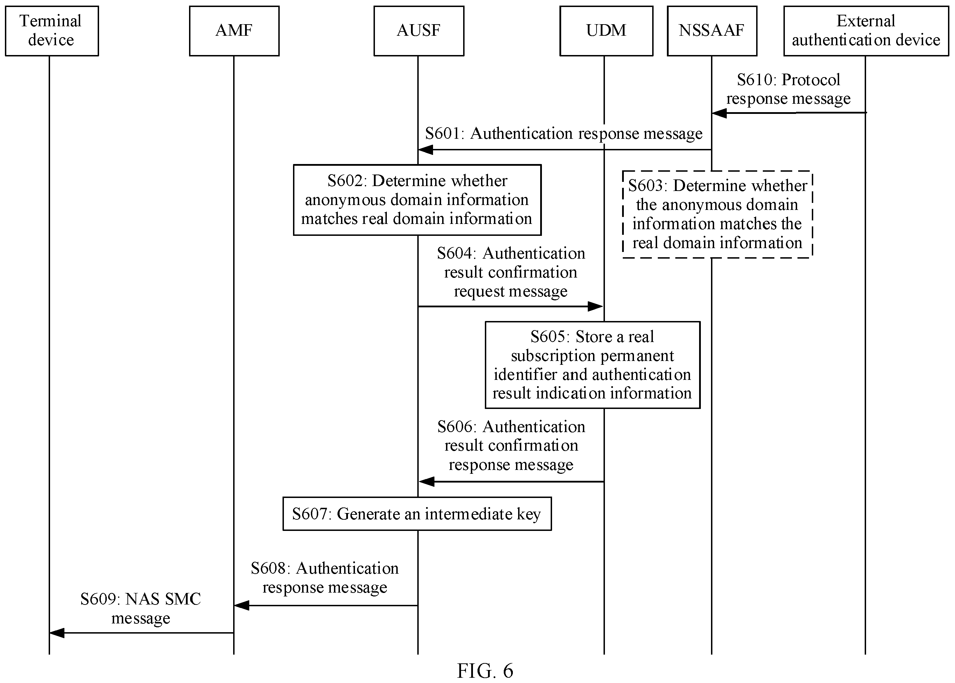

FIG. 6 is a schematic flowchart of still another communication method according to an embodiment of this application. FIG. 6 may be used in combination with FIG. 4. After authentication between the external authentication device and the terminal device in step S409 succeeds, the communication method shown in FIG. 6 may be performed.

As shown in FIG. 6, the communication method includes the following steps.

S601: The NSSAAF sends an authentication response message to the AUSF. Correspondingly, the AUSF receives the authentication response message from the NSSAAF.

For specific implementations of S601 and the authentication response message, refer to S501. Details are not described herein again.

In a possible design manner, the communication method provided in this embodiment of this application may further include: S610: The external authentication device sends a protocol response message to the NSSAAF. Correspondingly, the NSSAAF receives the protocol response message from the external authentication device.

For specific implementations of S610 and the protocol response message, refer to S512. Details are not described herein again.

S602: Optionally, the AUSF determines whether anonymous domain information matches real domain information.

For example, the anonymous domain information is domain information in an anonymous subscription permanent identifier, and the real domain information is domain information in a real subscription permanent identifier. The AUSF may determine whether the domain information in the real subscription permanent identifier matches the domain information in the anonymous subscription permanent identifier, to determine whether the real subscription permanent identifier used for authentication and the terminal device belong to a same network. In this way, it can be ensured that the real subscription permanent identifier for performing authentication by the external authentication device belongs to a network corresponding to the anonymous subscription permanent identifier.

For example, if the anonymous domain information matches the real domain information, the real domain information of the real subscription permanent identifier used for authentication and the anonymous domain information belong to the same network. The real subscription permanent identifier may be stored. If the anonymous domain information does not match the real domain information, the real subscription permanent identifier and the terminal device do not belong to the same network, and the external authentication device fails to authenticate the terminal device.

Optionally, the anonymous domain information may be obtained from the anonymous subscription permanent identifier, and the anonymous subscription permanent identifier may be received by using the authentication obtaining response message in S403.

Optionally, the real domain information may be obtained from the real subscription permanent identifier, or the authentication response message includes the real domain information.

In a possible design manner, the action of determining whether the anonymous domain information matches the real domain information may be performed by the NSSAAF (NSSAAF network element), for example, S603: The NSSAAF determines whether the anonymous domain information matches the real domain information. It should be noted that a specific implementation of S603 is similar to that of S602, and the AUSF needs to be replaced with the NSSAAF.

Optionally, the NSSAAF may send, to the AUSF, a result of whether the anonymous domain information matches the real domain information, for example, by using the authentication response message, where the authentication response message may include authentication result indication information, and the authentication result indication information indicates that the authentication on the terminal device succeeds.

S604: The AUSF sends an authentication result confirmation request message to the UDM when the real domain information matches the anonymous domain information. Correspondingly, the UDM receives the authentication result confirmation request message from the AUSF.

For specific implementations of S604 and the authentication result confirmation request message, refer to S509. Details are not described herein again.

S605: The UDM stores the real subscription permanent identifier and the authentication result indication information.

For a specific implementation of S605, refer to S510. Details are not described herein again.

S606: The UDM sends an authentication result confirmation response message to the AUSF. Correspondingly, the AUSF receives the authentication result confirmation response message from the UDM.

For a specific implementation of S606, refer to S511. Details are not described herein again. S607: The AUSF generates an intermediate key Kausf based on a master key and the real subscription permanent identifier.

When step S602 is performed, the AUSF may generate the intermediate key Kausf based on only a user identity information part in the real subscription permanent identifier. The user identity information in the real subscription permanent identifier may be a username part or an IMSI. This is not limited in embodiments of this application. When step S602 is not performed, the real subscription permanent identifier is an SUPI value. That is, a username and a realm are included.

Optionally, the intermediate key Kausf may be used for key derivation, for example, Kseaf derivation.

For example, the AUSF may determine the intermediate key Kausf based on the real subscription permanent identifier and the master key, and derive a key Kseaf by using a first key Kausf as a master key.

S608: The AUSF sends an authentication response message to the AMF. Correspondingly, the AMF receives the authentication response message from the AUSF.

Optionally, the authentication response message may include one or more of the following: an authentication success message, the real subscription permanent identifier, and/or the intermediate key Kseaf.

S609: The AMF sends a NAS SMC message to the terminal device. Correspondingly, the terminal device receives the NAS SMC message from the AMF.

Optionally, the NAS SMC message may include one or more of the following: the authentication success message.

Refer to S302. Details are not described herein again.

Based on the communication method shown in FIG. 6, the AUSF determines, based on the anonymous domain information and the real domain information, whether a real subscription permanent identifier used in a process in which the external authentication device performs authentication is the same as a real subscription permanent identifier of the terminal device. If the real subscription permanent identifier used in the process in which the external authentication device performs authentication is the same as the real subscription permanent identifier of the terminal device, two-way authentication between the terminal device and a network side can be completed. The terminal device considers that the network is real, and the network considers that the terminal device is real.

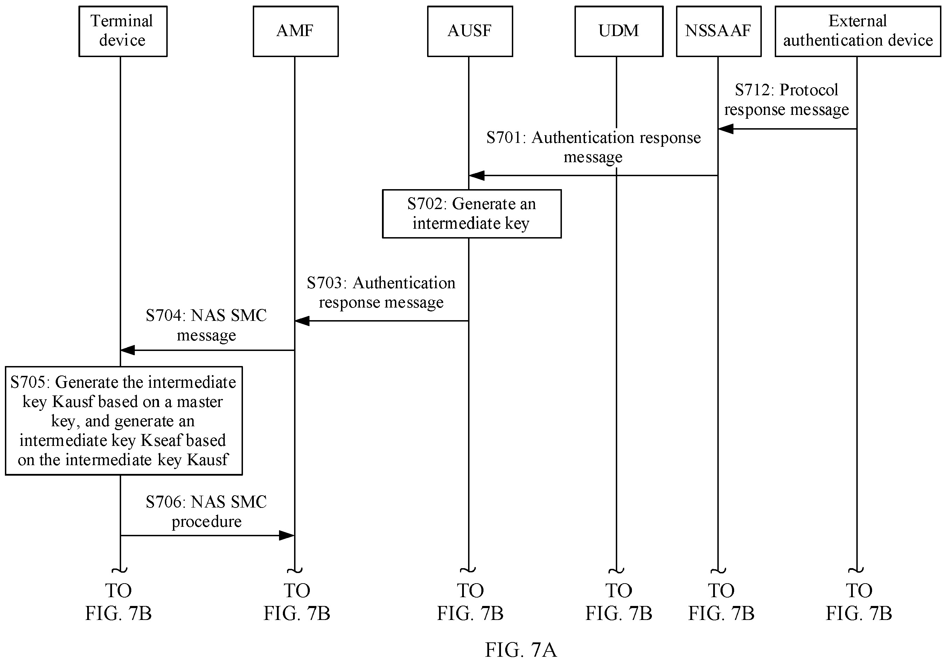

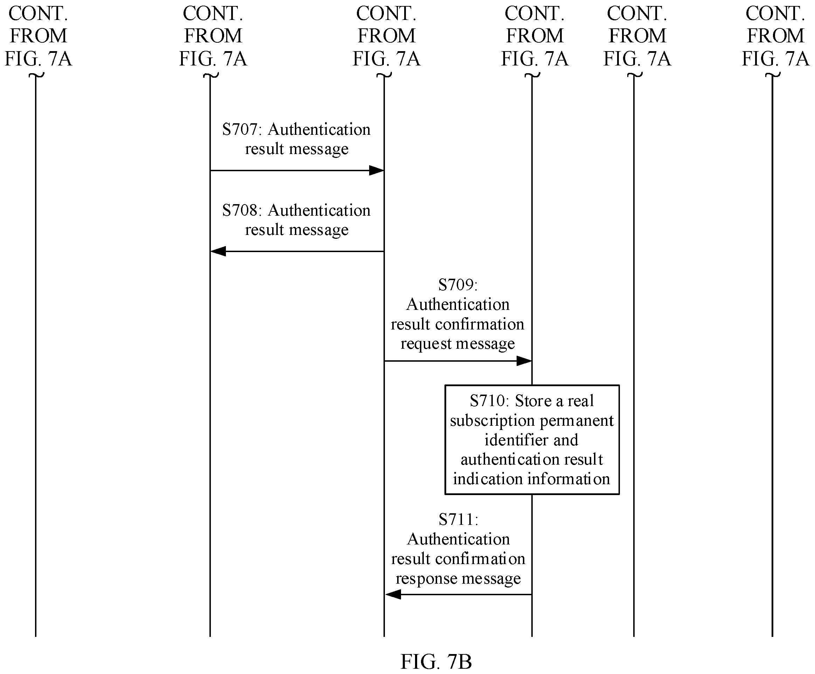

FIG. 7A and FIG. 7B are a schematic flowchart of yet another communication method according to an embodiment of this application. FIG. 7A and FIG. 7B may be used in combination with FIG. 4. After authentication between the external authentication device and the terminal device in step S409 succeeds, the communication method shown in FIG. 7A and FIG. 7B may be performed.

As shown in FIG. 7A and FIG. 7B, the communication method includes the following steps.

S701: The NSSAAF sends an authentication response message to the AUSF. Correspondingly, the AUSF receives the authentication response message from the NSSAAF.

For specific implementations of S701 and the authentication response message, refer to S501. Details are not described herein again.

In a possible design manner, the communication method provided in this embodiment of this application may further include: S712: The external authentication device sends a protocol response message to the NSSAAF. Correspondingly, the NSSAAF receives the protocol response message from the external authentication device.

For specific implementations of S712 and the protocol response message, refer to S511. Details are not described herein again.

S702: The AUSF generates an intermediate key Kausf based on a master key.

Optionally, the AUSF may determine the intermediate key Kausf based on the master key, and derive an intermediate key Kseaf by using the intermediate key Kausf as a master key.

It should be noted that, a method for determining the intermediate key Kausf in S702 is different from a method for determining the intermediate key Kausf in S604, and the intermediate key Kausf is determined based on the real subscription permanent identifier and the master key in S604.

S703: The AUSF sends an authentication response message to the AMF. Correspondingly, the AMF receives the authentication response message from the AUSF.

Optionally, the authentication response message may include one or more of the following: an authentication success message, the intermediate key Kseaf, and/or the real subscription permanent identifier.

S704: The AMF sends a NAS SMC message to the terminal device. Correspondingly, the terminal device receives the NAS SMC message from the AMF.

Optionally, the NAS SMC message may include one or more of the following: the authentication success message. The authentication success message indicates that the authentication on the terminal device succeeds.

Optionally, for the NAS SMC message, refer to S302. Details are not described herein again.

S705: In response to the authentication success message, the terminal device generates the intermediate key Kausf based on the master key, and generates the intermediate key Kseaf based on the intermediate key Kausf.

S706: The terminal device performs a NAS SMC procedure with the AMF.

The terminal device performs the NAS SMC procedure with the AMF based on the intermediate key Kseaf and the real subscription permanent identifier.

For a specific implementation of S706, refer to the method shown in FIG. 3. Details are not described herein again.

S707: When successfully performing the NAS SMC procedure with the terminal device, the AMF sends an authentication result message to the AUSF. Correspondingly, the AUSF receives the authentication result message from the AMF.

Optionally, the authentication result message may include authentication result indication information, and the authentication result indication information includes information indicating that the authentication on the terminal device succeeds, for example, may indicate that a real subscription permanent identifier is the same as a real subscription permanent identifier.

Optionally, the authentication result message may be used to notify the AUSF that the NAS SMC procedure of interaction with the terminal device succeeds.

With reference to the descriptions in FIG. 3, if the NAS SMC procedure succeeds, it can be learned that the real subscription permanent identifier used for authentication is the same as the real subscription permanent identifier of the terminal device. In this way, two-way authentication between the terminal device and a network side can be completed. The terminal device considers that the network is real, and the network considers that the terminal device is real.

Optionally, the authentication result indication information may indicate that the real subscription permanent identifier used in a process in which the external authentication device performs authentication is the same as the real subscription permanent identifier of the terminal device.

S708: The AUSF sends an authentication result response message to the AMF. Correspondingly, the AMF receives the authentication result response message from the AUSF.

S709: The AUSF sends an authentication result confirmation request message to the UDM. Correspondingly, the UDM receives the authentication result confirmation request message from the AUSF.

For specific implementations of S709 and the authentication result confirmation request message, refer to S509. Details are not described herein again.

It should be noted that a sequence of performing S708 and S709 is not limited in this application.

S710: The UDM stores the real subscription permanent identifier and the authentication result indication information.

For a specific implementation of S710, refer to S510. Details are not described herein again.

S711: The UDM sends an authentication result confirmation response message to the AUSF. Correspondingly, the AUSF receives the authentication result confirmation response message from the UDM.

For a specific implementation of S711, refer to S511. Details are not described herein again.

It should be noted that S709 to S711 may be performed after S701, or S709 to S711 may be performed after S708, so that the UDM performs recording when authentication on the real SUPI succeeds. This avoids extra signaling overhead caused by a need to indicate the UDM to delete an authentication record when authentication fails. This is not limited in this application.

Based on the communication method shown in FIG. 7A and FIG. 7B, the NAS SMC procedure is performed after an authentication procedure. If the NAS SMC procedure succeeds, it can be learned that the real subscription permanent identifier used for authentication is the same as the real subscription permanent identifier of the terminal device. Therefore, identity information corresponding to a credential used in the process in which the external authentication device performs authentication is the same as identity information corresponding to a credential of the terminal device. In this way, two-way authentication between the terminal device and the network side can be completed. The terminal device considers that the network is real, and the network considers that the terminal device is real.

In this application, unless otherwise specified, for same or similar parts in embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

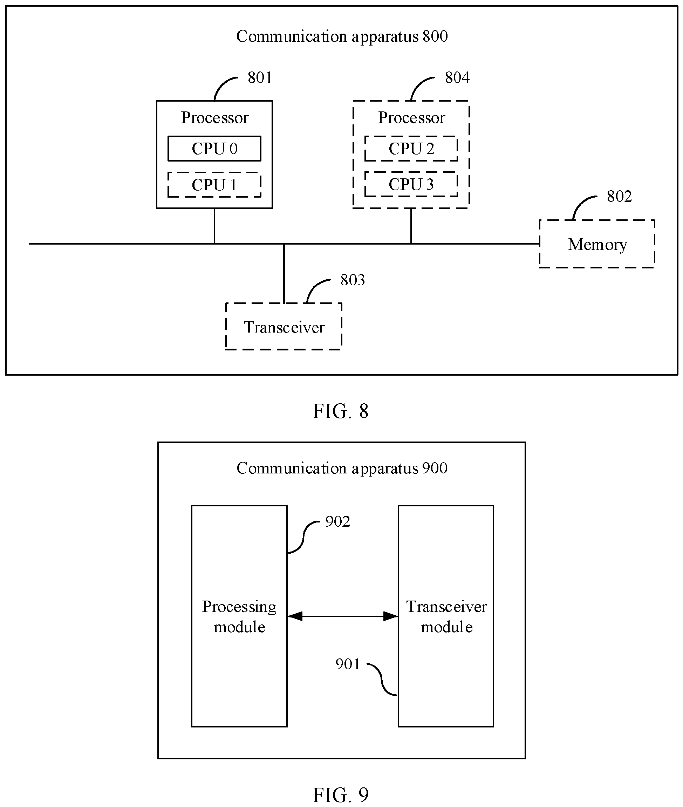

The foregoing describes in detail the communication methods provided in embodiments of this application with reference to FIG. 1 to FIG. 7B. The following describes in detail communication apparatuses provided in embodiments of this application with reference to FIG. 8 to FIG. 10.

FIG. 8 is a schematic diagram of a structure of a communication apparatus that may be configured to perform the communication method according to embodiments of this application. A communication apparatus 800 may be an access and mobility management function, an authentication server function, unified data management, a network slice-specific and standalone non-public network authentication and authorization function, a terminal device, or an external authentication device, or may be a chip used in an access and mobility management function, an authentication server function, unified data management, a network slice-specific and standalone non-public network authentication and authorization function, a terminal device, or an external authentication device, or another component that has a corresponding function. As shown in FIG. 8, the communication apparatus 800 may include a processor 801. Optionally, the communication apparatus 800 may further include one or more of a memory 802 and a transceiver 803. The processor 801 may be coupled to one or more of the memory 802 and the transceiver 803, for example, may be connected through a communication bus, or the processor 801 may be independently used.

The following specifically describes each component of the communication apparatus 800 with reference to FIG. 8.

The processor 801 is a control center of the communication apparatus 800, and may be one processor or may be a collective term of a plurality of processing elements. For example, the processor 801 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate arrays, FPGAs).

The processor 801 may run or execute a software program stored in the memory 802, and invoke data stored in the memory 802, to perform various functions of the communication apparatus 800.

In specific implementation, in an embodiment, the processor 801 may include one or more CPUs, for example, a CPU 0 and a CPU 1 that are shown in FIG. 8.

In specific implementation, in an embodiment, the communication apparatus 800 may alternatively include a plurality of processors, for example, the processor 801 and a processor 804 that are shown in FIG. 8. Each of the processors may be a single-core processor (single-CPU) or may be a multi-core processor (multi-CPU). The processor herein may be one or more communication devices, circuits, and/or processing cores configured to process data (for example, computer program instructions).

Optionally, the memory 802 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage communication device, or any other medium that can be used to carry or store expected program code in a form of an instruction or a data structure and that can be accessed by a computer. However, this is not limited thereto. The memory 802 may be integrated with the processor 801, or may exist independently, and is coupled to the processor 801 through an input/output port (not shown in FIG. 8) of the communication apparatus 800. This is not specifically limited in embodiments of this application.

For example, the input port may be configured to implement a receiving function performed by the access and mobility management function, the authentication server function, the unified data management, the network slice-specific and standalone non-public network authentication and authorization function, the terminal device, or the external authentication device in any one of the foregoing method embodiments. The output port may be configured to implement a sending function performed by the access and mobility management function, the authentication server function, the unified data management, the network slice-specific and standalone non-public network authentication and authorization function, the terminal device, or the external authentication device in any one of the foregoing method embodiments.

The memory 802 may be configured to store the software program for executing the solutions of this application, and the processor 801 controls execution of the software program. For the specific implementation, refer to the foregoing method embodiments. Details are not described herein again.

Optionally, the transceiver 803 is configured to communicate with another communication apparatus. For example, when the communication apparatus 800 is the unified data management, the transceiver 803 may be configured to communicate with the authentication server function and/or another network element. For another example, when the communication apparatus 800 is the authentication server function, the transceiver 803 may be configured to communicate with the network slice-specific and standalone non-public network authentication and authorization function, the access and mobility management function, the unified data management, and/or another network element. For another example, when the communication apparatus 800 is the terminal device, the transceiver 803 may be configured to communicate with the access and mobility management function and/or another network element. For another example, when the communication apparatus 800 is the access and mobility management function, the transceiver 803 may be configured to communicate with the terminal device, the authentication server function, and/or another network element. For another example, when the communication apparatus 800 is the network slice-specific and standalone non-public network authentication and authorization function, the transceiver 803 may be configured to communicate with the authentication server function, the external authentication device, and/or another network element. For another example, when the communication apparatus 800 is the external authentication device, the transceiver 803 may be configured to communicate with the authentication server function, the external authentication device, and/or another network element. In addition, the transceiver 803 may include a receiver and a transmitter (which are not separately shown in FIG. 8). The receiver is configured to implement the receiving function, and the transmitter is configured to implement the sending function. The transceiver 803 may be integrated with the processor 801, or may exist independently, and is coupled to the processor 801 through the input/output port (not shown in FIG. 8) of the communication apparatus 800. This is not specifically limited in embodiments of this application.

It should be noted that the structure of the communication apparatus 800 shown in FIG. 8 does not constitute a limitation on the communication apparatus. An actual communication apparatus may include more or fewer components than those shown in the figure, or combine some components, or have different component arrangement.

The foregoing actions of the unified data management in FIG. 1 to FIG. 7B may be executed by the unified data management through indication by the processor 801 in the communication apparatus 800 shown in FIG. 8 by invoking application program code stored in the memory 802. This is not limited in this embodiment.

The foregoing actions of the authentication server function in FIG. 1 to FIG. 7B may be executed by the authentication server function through indication by the processor 801 in the communication apparatus 800 shown in FIG. 8 by invoking application program code stored in the memory 802. This is not limited in this embodiment.

The foregoing actions of the terminal device in FIG. 1 to FIG. 7B may be executed by the terminal device through indication by the processor 801 in the communication apparatus 800 shown in FIG. 8 by invoking application program code stored in the memory 802. This is not limited in this embodiment.

The foregoing actions of the access and mobility management function in FIG. 1 to FIG. 7B may be executed by the access and mobility management function through indication by the processor 801 in the communication apparatus 800 shown in FIG. 8 by invoking application program code stored in the memory 802. This is not limited in this embodiment.

The foregoing actions of the network slice-specific and standalone non-public network authentication and authorization function in FIG. 1 to FIG. 7B may be executed by the network slice-specific and standalone non-public network authentication and authorization function through indication by the processor 801 in the communication apparatus 800 shown in FIG. 8 by invoking application program code stored in the memory 802. This is not limited in this embodiment.

The foregoing actions of the external authentication device in FIG. 1 to FIG. 7B may be executed by the external authentication device through indication by the processor 801 in the communication apparatus 800 shown in FIG. 8 by invoking application program code stored in the memory 802. This is not limited in this embodiment.

The communication apparatus 800 may perform any one or more of the possible design manners related to the access and mobility management function, the authentication server function, the unified data management, the network slice-specific and standalone non-public network authentication and authorization function, the terminal device, or the external authentication device in the foregoing method embodiments.

It should be noted that all related content of the steps in the foregoing method embodiments may be cited in function description of corresponding functional modules. Details are not described herein again.

FIG. 9 is a schematic diagram of a structure of another communication apparatus according to an embodiment of this application. For ease of description, FIG. 9 shows only main components of the communication apparatus.

A communication apparatus 900 includes a transceiver module 901 and a processing module 902. The communication apparatus 900 may be the authentication server function, the unified data management, the network slice-specific and standalone non-public network authentication and authorization function, the terminal device, or the external authentication device in the foregoing method embodiments. The transceiver module 901 may also be referred to as a transceiver unit, and is configured to implement sending and receiving functions performed by the authentication server function, the unified data management, the network slice-specific and standalone non-public network authentication and authorization function, the terminal device, or the external authentication device in any one of the foregoing method embodiments.

It should be noted that the transceiver module 901 may include a receiving module and a sending module (which are not shown in FIG. 9). The receiving module is configured to receive data and/or signaling from another device, and the sending module is configured to send data and/or signaling to the another device. A specific implementation of the transceiver module is not specifically limited in this application. The transceiver module may include a transceiver circuit, a transceiver machine, a transceiver, or a communication interface.

The processing module 902 may be configured to implement a processing function performed by the authentication server function, the unified data management, the network slice-specific and standalone non-public network authentication and authorization function, the terminal device, or the external authentication device in any one of the foregoing method embodiments. The processing module 902 may be a processor.

In this embodiment, the communication apparatus 900 is presented with functional modules divided through integration. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 900 may be in a form of the communication apparatus 800 shown in FIG. 8.

For example, the processor 801 in the communication apparatus 800 shown in FIG. 8 may invoke computer-executable instructions stored in the memory 802, so that the communication method in the foregoing method embodiment is performed.

Specifically, functions/implementation processes of the transceiver module 901 and the processing module 902 in FIG. 9 may be implemented by the processor 801 in the communication apparatus 800 shown in FIG. 8 by invoking the computer-executable instructions stored in the memory 802. Alternatively, a function/implementation process of the processing module 902 in FIG. 9 may be implemented by the processor 801 in the communication apparatus 800 shown in FIG. 8 by invoking the computer-executable instructions stored in the memory 802, and a function/implementation process of the transceiver module 901 in FIG. 9 may be implemented by using the transceiver 803 in the communication apparatus 800 shown in FIG. 8.

The communication apparatus 900 provided in this embodiment may perform the foregoing communication methods. Therefore, for technical effect that can be achieved by the communication apparatus 900, refer to the foregoing method embodiments. Details are not described herein again.

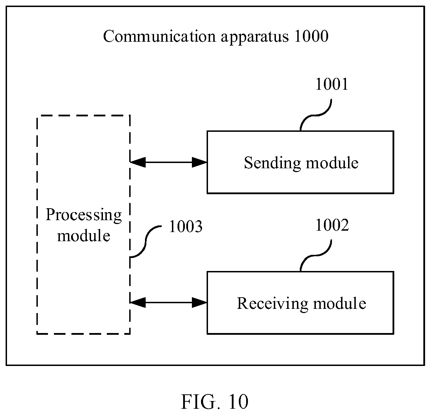

FIG. 10 is a schematic diagram of a structure of still another communication apparatus according to an embodiment of this application. For ease of description, FIG. 10 shows only main components of the communication apparatus.

A communication apparatus 1000 includes a sending module 1001 and a receiving module 1002. The communication apparatus 1000 may be the access and mobility management function in the foregoing method embodiments. The sending module 1001 may also be referred to as a sending unit, and is configured to implement a sending function performed by the access and mobility management function in any one of the foregoing method embodiments. The receiving module 1002 may also be referred to as a receiving unit, and is configured to implement a receiving function performed by the access and mobility management function in any one of the foregoing method embodiments.

It should be noted that the sending module 1001 and the receiving module 1002 may be separately disposed, or may be integrated into one module, namely, a transceiver module. Specific implementations of the receiving module and the sending module are not specifically limited in this application. The transceiver module may include a transceiver circuit, a transceiver machine, a transceiver, or a communication interface.

Optionally, the communication apparatus 1000 may further include a processing module 1003 and a storage module, and the storage module stores a program or instructions. When the processing module 1003 executes the program or the instructions, the communication apparatus 1000 is enabled to perform the method in any one of the foregoing method embodiments.

The processing module 1003 may be configured to implement a processing function performed by the access and mobility management function in any one of the foregoing method embodiments. The processing module 1003 may be a processor.

In this embodiment, the communication apparatus 1000 is presented with functional modules divided through integration. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the communication apparatus 1000 may be in a form of the communication apparatus 800 shown in FIG. 8.

For example, the processor 801 in the communication apparatus 800 shown in FIG. 8 may invoke computer-executable instructions stored in the memory 802, so that the communication method in the foregoing method embodiment is performed.

Specifically, functions/implementation processes of the processing module and the storage module in FIG. 10 may be implemented by using the transceiver 803 in the communication apparatus 800 shown in FIG. 8. A function/implementation process of the processing module in FIG. 10 may be implemented by the processor 801 in the communication apparatus 800 shown in FIG. 8 by invoking the computer-executable instructions stored in the memory 802.

The communication apparatus 1000 provided in this embodiment may perform the foregoing communication methods. Therefore, for technical effect that can be achieved by the communication apparatus 1000, refer to the foregoing method embodiments. Details are not described herein again.

In a possible design solution, the communication apparatus 900 shown in FIG. 9 may be used in the communication systems shown in FIG. 1 and FIG. 2, and perform the functions of the unified data management in the communication methods shown in FIG. 4 to FIG. 7B.

The transceiver module 901 is configured to receive an authentication obtaining request message from an authentication server function.

The processing module 902 is configured to determine, based on anonymous domain information and configuration information, an authentication mode for authenticating a terminal device.

The transceiver module 901 is further configured to send an authentication obtaining response message to the authentication server function.

The authentication obtaining request message includes an anonymous subscription concealed identifier, the anonymous subscription concealed identifier includes the anonymous domain information, and the anonymous domain information indicates an identifier of a network to which an authentication device capable of authenticating the terminal device belongs. The authentication mode includes an external authentication mode or an internal authentication mode, the configuration information includes an identifier of one or more networks corresponding to the external authentication mode and/or an identifier of one or more networks corresponding to the internal authentication mode. The authentication obtaining response message includes authentication indication information indicating the authentication mode.

It should be noted that all related content of the steps in the foregoing method embodiments may be cited in function description of corresponding functional modules. Details are not described herein again.

Optionally, the communication apparatus 900 may further include a storage module (which is not shown in FIG. 9), and the storage module stores a program or instructions. When the processing module 902 executes the program or the instructions, the communication apparatus 900 is enabled to perform the functions of the unified data management in the communication methods shown in FIG. 4 to FIG. 7B.

It should be noted that the communication apparatus 900 may be the unified data management, or may be a chip (system) or another part or component that may be disposed in the unified data management. This is not limited in this application.

In addition, for technical effect of the communication apparatus 900, refer to the technical effect of the communication methods shown in FIG. 4 to FIG. 7B. Details are not described herein again.

In another possible design solution, the communication apparatus 900 shown in FIG. 9 may be used in the communication systems shown in FIG. 1 and FIG. 2, and perform the functions of the authentication server function in the communication methods shown in FIG. 3 to FIG. 7B.

The transceiver module 901 is configured to send an authentication obtaining request message to unified data management.

The transceiver module 901 is further configured to receive an authentication obtaining response message from the unified data management.

The processing module 902 is configured to send an authentication request message to a network slice-specific and standalone non-public network authentication and authorization function based on authentication indication information.

The transceiver module 901 is further configured to receive an authentication response message from the network slice-specific and standalone non-public network authentication and authorization function.

The transceiver module 901 is further configured to send an authentication result confirmation request message to the unified data management when real domain information matches anonymous domain information.

Optionally, the authentication obtaining request message includes an anonymous subscription concealed identifier, the anonymous subscription concealed identifier includes the anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication result confirmation request message includes the real subscription permanent identifier and authentication result indication information, and the authentication result indication information indicates that the authentication on the terminal device succeeds.

It should be noted that all related content of the steps in the foregoing method embodiments may be cited in function description of corresponding functional modules. Details are not described herein again.

Optionally, the communication apparatus 900 may further include a storage module (which is not shown in FIG. 9), and the storage module stores a program or instructions. When the processing module 902 executes the program or the instructions, the communication apparatus 900 is enabled to perform the functions of the authentication server function in the communication methods shown in FIG. 3 to FIG. 7B.

It should be noted that the communication apparatus 900 may be the authentication server function, or may be a chip (system) or another part or component that may be disposed in the authentication server function. This is not limited in this application.

In addition, for technical effect of the communication apparatus 900, refer to the technical effect of the communication methods shown in FIG. 3 to FIG. 7B. Details are not described herein again.

In another possible design solution, the communication apparatus 900 shown in FIG. 9 may be used in the communication systems shown in FIG. 1 and FIG. 2, and perform the functions of the authentication server function in the communication methods shown in FIG. 3 to FIG. 7B.

The transceiver module 901 is configured to send an authentication obtaining request message to unified data management.

The transceiver module 901 is further configured to receive an authentication obtaining response message from the unified data management.

The transceiver module 901 is further configured to send an authentication request message to a network slice-specific and standalone non-public network authentication and authorization function based on authentication indication information.

The transceiver module 901 is further configured to receive an authentication response message from the network slice-specific and standalone non-public network authentication and authorization function.

The processing module 902 is configured to: in response to an authentication success message, generate network-side first verification information based on a master key, a real subscription permanent identifier, and a network-side counter value.

The transceiver module 901 is further configured to send the authentication response message to an access and mobility management function, where the authentication response message includes the authentication success message, the network-side first verification information, and the network-side counter value.

The transceiver module 901 is further configured to receive an authentication intermediate message from the access and mobility management function.

The processing module 902 is further configured to generate network-side second verification information based on the master key, the real subscription permanent identifier, and a terminal-side counter value.

The processing module 902 is further configured to determine whether terminal-side second verification information is consistent with the network-side second verification information.

The transceiver module 901 is further configured to: when the terminal-side second verification information is consistent with the network-side second verification information, send an authentication result confirmation request message to the unified data management.

Optionally, the authentication obtaining request message includes an anonymous subscription concealed identifier, the anonymous subscription concealed identifier includes anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes the real subscription permanent identifier, the authentication success message, and the master key, the real subscription permanent identifier includes real user name information, the real user name information identifies the terminal device, and the authentication success message indicates that the authentication on the terminal device succeeds. The authentication intermediate message includes the terminal-side second verification information and the terminal-side counter value. The authentication result confirmation request message includes the real subscription permanent identifier and authentication result indication information, and the authentication result indication information indicates that the authentication on the terminal device succeeds.

It should be noted that all related content of the steps in the foregoing method embodiments may be cited in function description of corresponding functional modules. Details are not described herein again.

Optionally, the communication apparatus 900 may further include a storage module (which is not shown in FIG. 9), and the storage module stores a program or instructions. When the processing module 902 executes the program or the instructions, the communication apparatus 900 is enabled to perform the functions of the authentication server function in the communication methods shown in FIG. 3 to FIG. 7B.

It should be noted that the communication apparatus 900 may be the authentication server function, or may be a chip (system) or another part or component that may be disposed in the authentication server function. This is not limited in this application.

In addition, for technical effect of the communication apparatus 900, refer to the technical effect of the communication methods shown in FIG. 3 to FIG. 7B. Details are not described herein again.

In another possible design solution, the communication apparatus 900 shown in FIG. 9 may be used in the communication systems shown in FIG. 1 and FIG. 2, and perform the functions of the authentication server function in the communication methods shown in FIG. 3 to FIG. 7B.

The transceiver module 901 is configured to send an authentication obtaining request message to unified data management.

The transceiver module 901 is further configured to receive an authentication obtaining response message from the unified data management.

The processing module 902 is configured to send an authentication request message to a network slice-specific and standalone non-public network authentication and authorization function based on authentication indication information.

The transceiver module 901 is further configured to receive an authentication response message from the network slice-specific and standalone non-public network authentication and authorization function.

The transceiver module 901 is further configured to send the authentication response message to an access and mobility management function.

The transceiver module 901 is further configured to receive an authentication result message from the access and mobility management function.

The transceiver module 901 is further configured to send an authentication result confirmation request message to the unified data management in response to authentication result indication information.

Optionally, the authentication obtaining request message includes an anonymous subscription concealed identifier, the anonymous subscription concealed identifier includes anonymous domain information, and the anonymous domain information indicates an identifier of a network to which an authentication device capable of authenticating a terminal device belongs. The authentication obtaining response message includes the authentication indication information and an anonymous subscription permanent identifier, and the authentication indication information indicates an authentication mode for authenticating the terminal device. The anonymous subscription permanent identifier includes the anonymous domain information. The authentication mode includes an external authentication mode or an internal authentication mode. The authentication request message is used to request to authenticate the terminal device, and the authentication request message includes the anonymous subscription permanent identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication response message includes the real subscription permanent identifier and/or the authentication success message. The authentication result message includes the authentication result indication information, and the authentication result indication information indicates that the authentication on the terminal device succeeds. The authentication result confirmation request message includes the real subscription permanent identifier and the authentication result indication information.

It should be noted that all related content of the steps in the foregoing method embodiments may be cited in function description of corresponding functional modules. Details are not described herein again.

Optionally, the communication apparatus 900 may further include a storage module (which is not shown in FIG. 9), and the storage module stores a program or instructions. When the processing module 902 executes the program or the instructions, the communication apparatus 900 is enabled to perform the functions of the authentication server function in the communication methods shown in FIG. 3 to FIG. 7B.

It should be noted that the communication apparatus 900 may be the authentication server function, or may be a chip (system) or another part or component that may be disposed in the authentication server function. This is not limited in this application.

In addition, for technical effect of the communication apparatus 900, refer to the technical effect of the communication methods shown in FIG. 3 to FIG. 7B. Details are not described herein again.

In another possible design solution, the communication apparatus 900 shown in FIG. 9 may be used in the communication systems shown in FIG. 1 and FIG. 2, and perform the functions of the terminal device in the communication methods shown in FIG. 3 to FIG. 7B.

The processing module 902 is configured to determine an anonymous subscription concealed identifier when a public key is not obtained.

The transceiver module 901 is configured to send a registration request message to an access and mobility management function.

The anonymous subscription concealed identifier includes anonymous domain information, anonymous user name information, and a routing indicator, the anonymous domain information indicates an identifier of a network to which an authentication device capable of authenticating the communication apparatus belongs, and the anonymous user name information is a default value. The registration request message includes the anonymous subscription concealed identifier.

In a possible design manner, the processing module 902 is further configured to: perform an authentication procedure with an external authentication server, and generate a master key. The transceiver module 901 is configured to receive a non-access stratum security mode command message from the access and mobility management function, where the non-access stratum security mode command message includes an authentication success message. The processing module 902 is further configured to generate an intermediate key based on the master key and a real subscription permanent identifier in response to the authentication success message. The authentication success message indicates that authentication on the communication apparatus succeeds. The real subscription permanent identifier includes real user name information, and the real user name information identifies the communication apparatus.

In a possible design manner, the processing module 902 is further configured to: perform an authentication procedure with an external authentication server, and generate a master key. The transceiver module 901 is configured to receive a non-access stratum security mode command message from the access and mobility management function. The processing module 902 is further configured to: in response to an authentication success message, generate terminal-side first verification information based on the master key, a real subscription permanent identifier, and a network-side counter value. The processing module 902 is further configured to determine whether the terminal-side first verification information is consistent with network-side first verification information. The processing module 902 is further configured to: when the terminal-side first verification information is consistent with the network-side first verification information, generate terminal-side second verification information based on the master key, the real subscription permanent identifier, and a terminal-side counter value. The transceiver module 901 is further configured to send an N1 message to the access and mobility management function.

The non-access stratum security mode command message includes the authentication success message, the network-side first verification information, and the network-side counter value, and the authentication success message indicates that authentication on the communication apparatus succeeds. The real subscription permanent identifier includes real user name information, and the real user name information identifies the communication apparatus. The N1 message includes the terminal-side second verification information and the terminal-side counter value.

In a possible design manner, the processing module 902 is further configured to: generate an intermediate key based on the master key, and generate the terminal-side first verification information based on the intermediate key, the real subscription permanent identifier, and the network-side counter value.

It should be noted that all related content of the steps in the foregoing method embodiments may be cited in function description of corresponding functional modules. Details are not described herein again.

Optionally, the communication apparatus 900 may further include a storage module (which is not shown in FIG. 9), and the storage module stores a program or instructions. When the processing module 902 executes the program or the instructions, the communication apparatus 900 is enabled to perform the functions of the terminal device in the communication methods shown in FIG. 3 to FIG. 7B.

It should be noted that the communication apparatus 900 may be the terminal device, or may be a chip (system) or another part or component that may be disposed in the terminal device. This is not limited in this application.

In addition, for technical effect of the communication apparatus 900, refer to the technical effect of the communication methods shown in FIG. 3 to FIG. 7B. Details are not described herein again.

In another possible design solution, the communication apparatus 900 shown in FIG. 9 may be used in the communication systems shown in FIG. 1 and FIG. 2, and perform the functions of the network slice-specific and standalone non-public network authentication and authorization function in the communication methods shown in FIG. 4 to FIG. 7B.

The transceiver module 901 is configured to receive an authentication request message from an authentication server function.

The transceiver module 901 is further configured to receive a protocol response message from an external authentication device.

The processing module 902 is configured to determine whether anonymous domain information matches real domain information.

The transceiver module 901 is further configured to send an authentication response message to the authentication server function when the real domain information matches the anonymous domain information.

The authentication request message may include an anonymous subscription permanent identifier. The anonymous subscription permanent identifier includes the anonymous domain information. The protocol response message may include a real subscription permanent identifier, and may further include an authentication success message and/or a master key MSK. The authentication response message may include authentication result indication information, and the authentication result indication information indicates that authentication on a terminal device succeeds.

It should be noted that all related content of the steps in the foregoing method embodiments may be cited in function description of corresponding functional modules. Details are not described herein again.

Optionally, the communication apparatus 900 may further include a storage module (which is not shown in FIG. 9), and the storage module stores a program or instructions. When the processing module 902 executes the program or the instructions, the communication apparatus 900 is enabled to perform the functions of the network slice-specific and standalone non-public network authentication and authorization function in the communication methods shown in FIG. 4 to FIG. 7B.

It should be noted that the communication apparatus 900 may be the network slice-specific and standalone non-public network authentication and authorization function, or may be a chip (system) or another part or component that may be disposed in the network slice-specific and standalone non-public network authentication and authorization function. This is not limited in this application.

In addition, for technical effect of the communication apparatus 900, refer to the technical effect of the communication methods shown in FIG. 4 to FIG. 7B. Details are not described herein again.

In a possible design solution, the communication apparatus 1000 shown in FIG. 10 may be used in the communication systems shown in FIG. 1 and FIG. 2, and perform the functions of the access and mobility management function in the communication methods shown in FIG. 4 to FIG. 7B.

The receiving module 1002 is configured to receive a registration request message from a terminal device.

The sending module 1001 is further configured to send an authentication request message to an authentication server function.

The receiving module 1002 is further configured to receive an authentication response message from the authentication server function.

The sending module 1001 is further configured to: when a non-access stratum security mode command procedure is successfully performed with the terminal device, send an authentication result message to the authentication server function.

The registration request message includes an anonymous subscription concealed identifier, the anonymous subscription concealed identifier includes anonymous domain information, anonymous user name information, and a routing indicator, the anonymous domain information indicates an identifier of a network to which an authentication device capable of authenticating the terminal device belongs, and the anonymous user name information is a default value. The authentication request message includes the anonymous subscription concealed identifier. The authentication response message includes a real subscription permanent identifier and/or an authentication success message, the real subscription permanent identifier includes real user name information, the real user name information identifies the terminal device, and the authentication success message indicates that the authentication on the terminal device succeeds. The authentication result message includes the real subscription permanent identifier and authentication result indication information, and the authentication result indication information indicates that the authentication on the terminal device succeeds.

It should be noted that all related content of the steps in the foregoing method embodiments may be cited in function description of corresponding functional modules. Details are not described herein again.

Optionally, the communication apparatus 1000 may further include a processing module 1003 and a storage module (which is not shown in FIG. 10), and the storage module stores a program or instructions. When the processing module 1003 executes the program or the instructions, the communication apparatus 1000 is enabled to perform the functions of the access and mobility management function in the communication methods shown in FIG. 4 to FIG. 7B.

It should be noted that the communication apparatus 1000 may be the access and mobility management function, or may be a chip (system) or another part or component that may be disposed in the access and mobility management function. This is not limited in this application.

In addition, for technical effect of the communication apparatus 1000, refer to the technical effect of the communication methods shown in FIG. 4 to FIG. 7B. Details are not described herein again.

An embodiment of this application provides a communication system. The communication system includes unified data management and an authentication server function. Optionally, the communication system may further include a network slice-specific and standalone non-public network authentication and authorization function, an access and mobility management function, and an external authentication server.

The unified data management is configured to perform the actions of the unified data management in the foregoing method embodiments. For a specific execution method and process, refer to the foregoing method embodiments. Details are not described herein again.

The authentication server function is configured to perform the actions of the authentication server function in the foregoing method embodiments. For a specific execution method and process, refer to the foregoing method embodiments. Details are not described herein again.

The network slice-specific and standalone non-public network authentication and authorization function is configured to perform the actions of the network slice-specific and standalone non-public network authentication and authorization function in the foregoing method embodiments. For a specific execution method and process, refer to the foregoing method embodiments. Details are not described herein again.

The access and mobility management function is configured to perform the actions of the access and mobility management function in the foregoing method embodiments. For a specific execution method and process, refer to the foregoing method embodiments. Details are not described herein again.

The external authentication server is configured to perform the actions of the external authentication server in the foregoing method embodiments. For a specific execution method and process, refer to the foregoing method embodiments. Details are not described herein again.

An embodiment of this application provides a chip system. The chip system includes a logic circuit and an input/output port. The logic circuit may be configured to implement a processing function related to the communication method provided in embodiments of this application, and the input/output port may be configured to implement sending and receiving functions related to the communication method provided in embodiments of this application.

For example, the input port may be configured to implement a receiving function related to the communication method provided in embodiments of this application, and the output port may be configured to implement a sending function related to the communication method provided in embodiments of this application.

For example, the processor in the communication apparatus 800 may be configured to perform, for example, but not limited to, baseband related processing, and the transceiver in the communication apparatus 800 may be configured to perform, for example, but not limited to, radio frequency transmission and reception. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of integrated circuit technologies, increasing components may be integrated on a same chip. For example, the digital baseband processor may be integrated on a same chip with a plurality of application processors (for example, but not limited to a graphics processing unit and a multimedia processor). The chip may be referred to as a system-on-chip (system-on-chip). Whether components are independently disposed on different chips or are integrated and disposed on one or more chips usually depends on specific requirements of a product design. Specific implementations of the foregoing components are not limited in embodiments of this application.

In a possible design, the chip system further includes a memory, and the memory is configured to store program instructions and data for implementing functions related to the communication method provided in embodiments of this application.

The chip system may include a chip, or may include a chip and another discrete component.

An embodiment of this application provides a computer-readable storage medium. The computer-readable storage medium stores a computer program or instructions. When the computer program or the instructions are run on a computer, the communication method provided in embodiments of this application is performed.

An embodiment of this application provides a computer program product. The computer program product includes a computer program or instructions. When the computer program or the instructions are run on a computer, the communication method provided in embodiments of this application is performed.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication system, wherein the communication system comprises unified data management and an authentication server function, wherein

    the authentication server function is configured to send an authentication obtaining request message to the unified data management, wherein the authentication obtaining request message comprises an anonymous subscription concealed identifier, the anonymous subscription concealed identifier comprises anonymous domain information, and the anonymous domain information indicates an identifier of a network to which an authentication device capable of authenticating a terminal device belongs;
    the unified data management is configured to: receive the authentication obtaining request message from the authentication server function, determine, based on the anonymous domain information and configuration information, an authentication mode for authenticating the terminal device, and send an authentication obtaining response message to the authentication server function, wherein the authentication mode comprises an external authentication mode or an internal authentication mode, the configuration information comprises an identifier of one or more networks corresponding to the external authentication mode and/or an identifier of one or more networks corresponding to the internal authentication mode, the authentication obtaining response message comprises an anonymous subscription permanent identifier and authentication indication information indicating the authentication mode, and the anonymous subscription permanent identifier comprises the anonymous domain information; and
    the authentication server function is further configured to: receive the authentication obtaining response message from the unified data management, and send an authentication request message to a network slice-specific and standalone non-public network authentication and authorization function based on the authentication indication information, wherein the authentication request message is used to request to authenticate the terminal device, and the authentication request message comprises the anonymous subscription permanent identifier.

2. The communication system according to claim 1, wherein the anonymous subscription concealed identifier further comprises anonymous user name information and a routing indicator, and the anonymous user name information is a default value.

3. The communication system according to claim 1 or 2, wherein the system further comprises the network slice-specific and standalone non-public network authentication and authorization functi on;

    the network slice-specific and standalone non-public network authentication and authorization function is configured to: receive the authentication request message from the authentication server function, and send an authentication response message to the authentication server function, wherein the authentication response message comprises a real subscription permanent identifier and/or an authentication success message, the real subscription permanent identifier comprises real user name information, the real user name information identifies the terminal device, and the authentication success message indicates that the authentication on the terminal device succeeds;

the authentication server function is further configured to: receive the authentication response message from the network slice-specific and standalone non-public network authentication and authorization function, and send an authentication result confirmation request message to the unified data management, wherein the authentication result confirmation request message comprises the real subscription permanent identifier and authentication result indication information, and the authentication result indication information indicates that the authentication on the terminal device succeeds; and

the unified data management is further configured to: receive the authentication result confirmation request message from the authentication server function, and store the real subscription permanent identifier and the authentication result indication information.

4. The communication system according to claim 3, wherein the authentication response message further comprises a master key; and
the authentication server function is further configured to generate an intermediate key based on the master key and the real subscription permanent identifier.

5. The communication system according to claim 1 or 2, wherein an authentication response message further comprises a master key, and the communication system further comprises an access and mobility management function and the network slice-specific and standalone non-public network authentication and authorization function;

the network slice-specific and standalone non-public network authentication and authorization function is configured to: receive the authentication request message from the authentication server function, and send the authentication response message to the authentication server function, wherein the authentication response message comprises a real subscription permanent identifier and/or an authentication success message, the real subscription permanent identifier comprises real user name information, the real user name information identifies the terminal device, and the authentication success message indicates that the authentication on the terminal device succeeds;

the authentication server function is further configured to: receive the authentication response message from the network slice-specific and standalone non-public network authentication and authorization function; in response to the authentication success message, generate network-side first verification information based on the master key, the real subscription permanent identifier, and a network-side counter value; and send the authentication response message to the access and mobility management function, wherein the authentication response message comprises the authentication success message, the network-side first verification information, and the network-side counter value;

the access and mobility management function is configured to: receive the authentication response message from the authentication server function, and send a non-access stratum security mode command message to the terminal device, wherein the non-access stratum security mode command message comprises the authentication success message, the network-side first verification information, and the network-side counter value;

the access and mobility management function is further configured to send an authentication intermediate message to the authentication server function, wherein the authentication intermediate message comprises terminal-side second verification information and a terminal-side counter value;

the authentication server function is further configured to: receive the authentication intermediate message from the access and mobility management function, and send an authentication result confirmation request message to the unified data management, wherein the authentication result confirmation request message comprises the real subscription permanent identifier and authentication result indication information, and the authentication result indication information indicates that the authentication on the terminal device succeeds; and

the unified data management is further configured to: receive the authentication result confirmation request message from the authentication server function, and store the real subscription permanent identifier and the authentication result indication information.

6. The communication system according to claim 5, wherein
the authentication server function is further configured to: generate an intermediate key based on the master key, and generate the network-side first verification information based on the intermediate key, the real subscription permanent identifier, and the network-side counter value.

7. The communication system according to claim 1 or 2, wherein an authentication response message further comprises a master key, and the communication system further comprises an access and mobility management function and the network slice-specific and standalone non-public network authentication and authorization function;

the network slice-specific and standalone non-public network authentication and authorization function is configured to: receive the authentication request message from the authentication server function, and send the authentication response message to the authentication server function, wherein the authentication response message comprises a real subscription permanent identifier, an authentication success message, and the master key, the real subscription permanent identifier comprises real user name information, the real user name information identifies the terminal device, and the authentication success message indicates that the authentication on the terminal device succeeds;

the authentication server function is further configured to: receive the authentication response message from the network slice-specific and standalone non-public network authentication and authorization function, and send the authentication response message to the access and mobility management function, wherein the authentication response message comprises the real subscription permanent identifier and/or the authentication success message, and an intermediate key Kseaf;

the access and mobility management function is configured to: receive the authentication response message from the authentication server function, and send a non-access stratum security mode command message to the terminal device, wherein the non-access stratum security mode command message comprises the authentication success message;

when the access and mobility management function and the terminal device successfully perform a non-access stratum security mode command procedure, the access and mobility management function is further configured to send an authentication result message to the authentication server function, wherein the authentication result message comprises authentication result indication information, and the authentication result indication information indicates that the authentication on the terminal device succeeds;

the authentication server function is further configured to: receive the authentication result message from the access and mobility management function, and send an authentication result response message to the access and mobility management function;

the access and mobility management function is further configured to receive the authentication result response message from the authentication server function;

the authentication server function is further configured to send an authentication result confirmation request message to the unified data management, wherein the authentication result confirmation request message comprises the real subscription permanent identifier and the authentication result indication information; and

the unified data management is further configured to: receive the authentication result confirmation request message from the authentication server function, and store the real subscription permanent identifier and the authentication result indication information.

8. A communication method, comprising:

receiving an authentication obtaining request message from an authentication server function, wherein the authentication obtaining request message comprises an anonymous subscription concealed identifier, the anonymous subscription concealed identifier comprises anonymous domain information, and the anonymous domain information indicates an identifier of a network to which an authentication device capable of authenticating a terminal device belongs;

determining, based on the anonymous domain information and configuration information, an authentication mode for authenticating the terminal device, wherein the authentication mode comprises an external authentication mode or an internal authentication mode, and the configuration information comprises an identifier of one or more networks corresponding to the external authentication mode and/or an identifier of one or more networks corresponding to the internal authentication mode; and

sending an authentication obtaining response message to the authentication server function, wherein the authentication obtaining response message comprises authentication indication information indicating the authentication mode.

9. The communication method according to claim 8, wherein the determining, based on the anonymous domain information and configuration information, an authentication mode for authenticating the terminal device comprises:

when the identifier of the network to which the authentication device capable of authenticating the terminal device belongs matches the identifier of the one or more networks corresponding to the external authentication mode, determining that the authentication mode for authenticating the terminal device is the external authentication mode; or

when the identifier of the network to which the authentication device capable of authenticating the terminal device belongs matches the identifier of the one or more networks corresponding to the internal authentication mode, determining that the authentication mode for authenticating the terminal device is the internal authentication mode.

10. The communication method according to claim 8 or 9, wherein the authentication obtaining response message further comprises an anonymous subscription permanent identifier, the anonymous subscription permanent identifier is determined based on the anonymous subscription concealed identifier, and the anonymous subscription permanent identifier comprises the anonymous domain information.

11. The communication method according to any one of claims 8 to 10, wherein the anonymous subscription concealed identifier further comprises anonymous user name information and a routing indicator, and the anonymous user name information is a default value.

12. The communication method according to any one of claims 8 to 11, wherein the method further comprises:

receiving an authentication result confirmation request message from the authentication server function, wherein the authentication result confirmation request message comprises a real subscription permanent identifier and authentication result indication information, the authentication result indication information indicates that the authentication on the terminal device succeeds, the real subscription permanent identifier comprises real user name information, and the real user name information identifies the terminal device; and

storing the real subscription permanent identifier and the authentication result indication information.

13. A communication method, comprising:

sending an authentication obtaining request message to unified data management, wherein the authentication obtaining request message comprises an anonymous subscription concealed identifier, the anonymous subscription concealed identifier comprises anonymous domain information, and the anonymous domain information indicates an identifier of a network to which an authentication device capable of authenticating a terminal device belongs;

receiving an authentication obtaining response message from the unified data management, wherein the authentication obtaining response message comprises authentication indication information and an anonymous subscription permanent identifier, the authentication indication information indicates an authentication mode for authenticating the terminal device, the anonymous subscription permanent identifier comprises the anonymous domain information, and the authentication mode comprises an external authentication mode or an internal authentication mode;

sending an authentication request message to a network slice-specific and standalone non-public network authentication and authorization function based on the authentication indication information, wherein the authentication request message is used to request to authenticate the terminal device, and the authentication request message comprises the anonymous subscription permanent identifier;

receiving an authentication response message from the network slice-specific and standalone non-public network authentication and authorization function, wherein the authentication response message comprises a real subscription permanent identifier and/or an authentication success message, the real subscription permanent identifier comprises real user name information, the real user name information identifies the terminal device, and the authentication success message indicates that the authentication on the terminal device succeeds; and

sending an authentication result confirmation request message to the unified data management, wherein the authentication result confirmation request message comprises the real subscription permanent identifier and authentication result indication information, and the authentication result indication information indicates that the authentication on the terminal device succeeds.

14. The communication method according to claim 13, wherein the authentication response message further comprises a master key, and the method further comprises:

generating an intermediate key based on the master key and the real subscription permanent identifier.

15. The communication method according to claim 13 or 14, wherein the anonymous subscription concealed identifier further comprises anonymous user name information and a routing indicator, and the anonymous user name information is a default value.

16. A communication method, comprising:

sending an authentication obtaining request message to unified data management, wherein the authentication obtaining request message comprises an anonymous subscription concealed identifier, the anonymous subscription concealed identifier comprises anonymous domain information, and the anonymous domain information indicates an identifier of a network to which an authentication device capable of authenticating a terminal device belongs;

receiving an authentication obtaining response message from the unified data management, wherein the authentication obtaining response message comprises authentication indication information and an anonymous subscription permanent identifier, the authentication indication information indicates an authentication mode for authenticating the terminal device, the anonymous subscription permanent identifier comprises the anonymous domain information, and the authentication mode comprises an external authentication mode or an internal authentication mode;

sending an authentication request message to a network slice-specific and standalone non-public network authentication and authorization function based on the authentication indication information, wherein the authentication request message is used to request to authenticate the terminal device, and the authentication request message comprises the anonymous subscription permanent identifier;

receiving an authentication response message from the network slice-specific and standalone non-public network authentication and authorization function, wherein the authentication response message comprises a real subscription permanent identifier, an authentication success message, and a master key, the real subscription permanent identifier comprises real user name information, the real user name information identifies the terminal device, and the authentication success message indicates that the authentication on the terminal device succeeds;

in response to the authentication success message, generating network-side first verification information based on the master key, the real subscription permanent identifier, and a network-side counter value;

sending the authentication response message to an access and mobility management function, wherein the authentication response message comprises the authentication success message, the network-side first verification information, and the network-side counter value;

receiving an authentication intermediate message from the access and mobility management function, wherein the authentication intermediate message comprises terminal-side second verification information and a terminal-side counter value; and

sending an authentication result confirmation request message to the unified data management, wherein the authentication result confirmation request message comprises the real subscription permanent identifier and authentication result indication information, and the authentication result indication information indicates that the authentication on the terminal device succeeds.

17. The communication method according to claim 16, wherein the anonymous subscription concealed identifier further comprises anonymous user name information and a routing indicator, and the anonymous user name information is a default value.

18. The communication method according to claim 16 or 17, wherein the generating network-side first verification information based on the master key, the real subscription permanent identifier, and a network-side counter value comprises:

generating an intermediate key based on the master key; and
generating the network-side first verification information based on the intermediate key, the real subscription permanent identifier, and the network-side counter value.

19. A communication method, comprising:

sending an authentication obtaining request message to unified data management, wherein the authentication obtaining request message comprises an anonymous subscription concealed identifier, the anonymous subscription concealed identifier comprises anonymous domain information, and the anonymous domain information indicates an identifier of a network to which an authentication device capable of authenticating a terminal device belongs;

receiving an authentication obtaining response message from the unified data management, wherein the authentication obtaining response message comprises authentication indication information and an anonymous subscription permanent identifier, the authentication indication information indicates an authentication mode for authenticating the terminal device, the anonymous subscription permanent identifier comprises the anonymous domain information, and the authentication mode comprises an external authentication mode or an internal authentication mode;

sending an authentication request message to a network slice-specific and standalone non-public network authentication and authorization function based on the authentication indication information, wherein the authentication request message is used to request to authenticate the terminal device, and the authentication request message comprises the anonymous subscription permanent identifier;

receiving an authentication response message from the network slice-specific and standalone non-public network authentication and authorization function, wherein the authentication response message comprises a real subscription permanent identifier and/or an authentication success message, the real subscription permanent identifier comprises real user name information, the real user name information identifies the terminal device, and the authentication success message indicates that the authentication on the terminal device succeeds;

sending the authentication response message to an access and mobility management function, wherein the authentication response message comprises the real subscription permanent identifier and/or the authentication success message;

receiving an authentication result message from the access and mobility management function, wherein the authentication result message comprises authentication result indication information, and the authentication result indication information indicates that the authentication on the terminal device succeeds; and

sending an authentication result confirmation request message to the unified data management, wherein the authentication result confirmation request message comprises the real subscription permanent identifier and the authentication result indication information.

20. The communication method according to claim 19, wherein the authentication response message further comprises a master key, and the method further comprises:
generating an intermediate key based on the master key.

21. The communication method according to claim 19 or 20, wherein the anonymous subscription concealed identifier further comprises anonymous user name information and a routing indicator, and the anonymous user name information is a default value.

22. A communication method, comprising:

determining an anonymous subscription concealed identifier when a public key is not obtained, wherein the anonymous subscription concealed identifier comprises anonymous domain information, anonymous user name information, and a routing indicator, the anonymous domain information indicates an identifier of a network to which an authentication device capable of authenticating a terminal device belongs, and the anonymous user name information is a default value; and

sending a registration request message to an access and mobility management function, wherein the registration request message comprises the anonymous subscription concealed identifier.

23. The communication method according to claim 22, wherein the method further comprises:

performing an authentication procedure with an external authentication device, and generating a master key;
receiving a non-access stratum security mode command message from the access and mobility management function, wherein the non-access stratum security mode command message comprises an authentication success message, and the authentication success message indicates that the authentication on the terminal device succeeds; and

in response to the authentication success message, generating an intermediate key based on the master key and a real subscription permanent identifier, wherein the real subscription permanent identifier comprises real user name information, and the real user name information identifies the terminal device.

24. The communication method according to claim 22, wherein the method further comprises:

performing an authentication procedure with an external authentication device, and generating a master key;
receiving a non-access stratum security mode command message from the access and mobility management function, wherein the non-access stratum security mode command message comprises an authentication success message, network-side first verification information, and a network-side counter value, and the authentication success message indicates that the authentication on the terminal device succeeds;

in response to the authentication success message, generating terminal-side first verification information based on the master key, a real subscription permanent identifier, and the network-side counter value, wherein the real subscription permanent identifier comprises real user name information, and the real user name information identifies the terminal device;

determining whether the terminal-side first verification information is consistent with the network-side first verification information;

when the terminal-side first verification information is consistent with the network-side first verification information, generating terminal-side second verification information based on the master key, the real subscription permanent identifier, and a terminal-side counter value; and

sending an N1 message to the access and mobility management function, wherein the N1 message comprises the terminal-side second verification information and the terminal-side counter value.

25. The communication method according to claim 24, wherein the generating terminal-side first verification information based on the master key, a real subscription permanent identifier, and the network-side counter value comprises:

generating an intermediate key based on the master key; and

generating the terminal-side first verification information based on the intermediate key, the real subscription permanent identifier, and the network-side counter value.

26. A communication method, comprising:

receiving a registration request message from a terminal device, wherein the registration request message comprises an anonymous subscription concealed identifier, the anonymous subscription concealed identifier comprises anonymous domain information, anonymous user name information, and a routing indicator, the anonymous domain information indicates an identifier of a network to which an authentication device capable of authenticating the terminal device belongs, and the anonymous user name information is a default value;

sending an authentication request message to an authentication server function, wherein the authentication request message comprises the anonymous subscription concealed identifier;

receiving an authentication response message from the authentication server function, wherein the authentication response message comprises a real subscription permanent identifier and/or an authentication success message, the real subscription permanent identifier comprises real user name information, the real user name information identifies the terminal device, and the authentication success message indicates that the authentication on the terminal device succeeds; and

when a non-access stratum security mode command procedure is successfully performed with the terminal device, sending an authentication result message to the authentication server function, wherein the authentication result message comprises the real subscription permanent identifier and authentication result indication information, and the authentication result indication information indicates that the authentication on the terminal device succeeds.

27. A communication apparatus, wherein the communication apparatus comprises a unit or a module configured to perform the method according to any one of claims 8 to 26.

28. A communication apparatus, wherein the communication apparatus comprises a processor, and the processor is configured to perform the communication method according to any one of claims 8 to 26.

29. A computer-readable storage medium, wherein the computer-readable storage medium stores a computer program or instructions; and when the computer program or the instructions are run on a computer, the communication method according to any one of claims 8 to 26 is performed.

30. A computer program product, wherein the computer program product comprises a computer program or instructions; and when the computer program or the instructions are run on a computer, the communication method according to any one of claims 8 to 26 is performed.

Terminal
device

Core network
element

External authentication
device

FIG. 1

FIG. 2

```
┌─────────────────────┐                              ┌─────────────────────┐
│   Terminal device   │                              │         AMF         │
└─────────────────────┘                              └─────────────────────┘
           │                                                     │
           │                              ┌──────────────────────┴──────────────────────┐
           │                              │      S301: Start integrity protection        │
           │                              └──────────────────────┬──────────────────────┘
           │          S302: NAS SMC message                      │
           │ ◄───────────────────────────────────────────────────│
┌──────────┴───────────────────────┐        ┌────────────────────┴────────────────────┐
│ S305: Perform NAS SMC integrity   │        │      S303: Start uplink decryption        │
│      protection verification      │        │              protection                   │
└──────────┬───────────────────────┘        └────────────────────┬────────────────────┘
           │                                                      │
           │          S306: NAS SMP message                       │
           │─────────────────────────────────────────────────────►
           │                                 ┌────────────────────┴────────────────────┐
           │                                 │   S304: Start downlink encryption         │
           │                                 │              protection                   │
           │                                 └────────────────────┬────────────────────┘
           │                                                      │
```

FIG. 3

| Terminal device | AMF | AUSF | UDM | NSSAAF | External authentication device |
|---|---|---|---|---|---|

S405: Determine an anonymous subscription concealed identifier when a public key is not obtained

S406: Registration request message

S407: Authentication request message

S401: Authentication obtaining request message

S402: Determine, based on anonymous domain information and configuration information, an authentication mode for authenticating the terminal device

S403: Authentication obtaining response message

S404: Authentication request message

S408: Protocol request message

S409: Perform an authentication procedure

FIG. 4

| Terminal device | AMF | AUSF | UDM | NSSAAF | External authentication device |
|---|---|---|---|---|---|

S512: Protocol response message

S501: Authentication response message

S502: Generate network-side first verification information

S503: Authentication response message

S504: NAS SMC message

S505: Determine whether terminal-side first verification information is consistent with the network-side first verification information

S506: N1 message

TO FIG. 5B    TO FIG. 5B    TO FIG. 5B    TO FIG. 5B    TO FIG. 5B    TO FIG. 5B

FIG. 5A

CONT.
FROM
FIG. 5A

CONT.
FROM
FIG. 5A

CONT.
FROM
FIG. 5A

CONT.
FROM
FIG. 5A

CONT.
FROM
FIG. 5A

CONT.
FROM
FIG. 5A

S507: Authentication
intermediate message

S508: Determine whether terminal-
side second verification information
is consistent with network-side
second verification information

S509: Authentication
result confirmation
request message

S510: Store a real
subscription permanent
identifier and
authentication result
indication information

S511: Authentication
result confirmation
response message

FIG. 5B

EP 4 422 235 A1

| Terminal device | AMF | AUSF | UDM | NSSAAF | External authentication device |
|---|---|---|---|---|---|

S610: Protocol response message

S601: Authentication response message

S602: Determine whether anonymous domain information matches real domain information

S603: Determine whether the anonymous domain information matches the real domain information

S604: Authentication result confirmation request message

S605: Store a real subscription permanent identifier and authentication result indication information

S606: Authentication result confirmation response message

S607: Generate an intermediate key

S608: Authentication response message

S609: NAS SMC message

FIG. 6

FIG. 7A

Boxes: External authentication device, NSSAAF, UDM, AUSF, AMF, Terminal device

S712: Protocol response message

S701: Authentication response message

S702: Generate an intermediate key

S703: Authentication response message

S704: NAS SMC message

S705: Generate the intermediate key Kausf based on a master key, and generate an intermediate key Kseaf based on the intermediate key Kausf

S706: NAS SMC procedure

TO FIG. 7B (External authentication device)
TO FIG. 7B (NSSAAF)
TO FIG. 7B (UDM)
TO FIG. 7B (AUSF)
TO FIG. 7B (AMF)
TO FIG. 7B (Terminal device)

CONT.
FROM
FIG. 7A

CONT.
FROM
FIG. 7A

CONT.
FROM
FIG. 7A

CONT.
FROM
FIG. 7A

CONT.
FROM
FIG. 7A

CONT.
FROM
FIG. 7A

S707: Authentication
result message

S708: Authentication
result message

S709:
Authentication
result confirmation
request message

S710: Store a real
subscription permanent
identifier and
authentication result
indication information

S711:
Authentication
result confirmation
response message

FIG. 7B

EP 4 422 235 A1

Communication apparatus 800

801

Processor

CPU 0

CPU 1

804

Processor

CPU 2

CPU 3

802

Memory

803

Transceiver

FIG. 8

Communication apparatus 900

902

Processing module

Transceiver module

901

FIG. 9

Communication apparatus 1000

1001

Processing module

Sending module

1003

1002

Receiving module

FIG. 10

<div align="center">**INTERNATIONAL SEARCH REPORT**</div>

| | International application No. |
|---|---|
| | **PCT/CN2022/128443** |

| A. | CLASSIFICATION OF SUBJECT MATTER |
|---|---|
| | H04W 12/02(2009.01)i |

According to International Patent Classification (IPC) or to both national classification and IPC

| B. | FIELDS SEARCHED |
|---|---|

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; CNKI; ENTXTC; VEN; 3GPP: 匿名, 签约隐藏, 订阅隐藏, 签约永久, 订阅永久, 统一数据管理, 鉴权服务器, 认证, 鉴权, anonymous, SUCI, SUPI, UDM, AUSF, authentication, authorization

| C. | DOCUMENTS CONSIDERED TO BE RELEVANT |
|---|---|

| Category* | Citation of document, with indication, where appropriate, of the relevant passages | Relevant to claim No. |
|---|---|---|
| X | ERICSSON. "S3-213514 "Removing Editors notes in I.2.2.z"" <br> *3GPP tsg_sa\wg3_security,* Vol. , No. , 20 September 2021 (2021-09-20), <br> ISSN: , <br>     parts 3-4 | 1-4, 7-15, 19-30 |
| A | LENOVO et al. "S3-203309 "Anonymous SUCI for N5GC"" <br> *3GPP tsg_sa\wg3_security,* Vol. , No. , 30 October 2020 (2020-10-30), <br> ISSN: , <br>     entire document | 1-30 |
| A | ERICSSON. "S3-201881 "Anonymous SUCI for N5GC"" <br> *3GPP tsg_sa\wg3_security,* Vol. , No. , 07 August 2020 (2020-08-07), <br> ISSN: , <br>     entire document | 1-30 |
| A | ERICSSON. "S3-203170 "Authentication method selection and SUPI retrieval for N5GC"" <br> *3GPP tsg_sa\wg3_security,* Vol. , No. , 30 October 2020 (2020-10-30), <br> ISSN: , <br>     entire document | 1-30 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 January 2023** | **19 January 2023** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/128443**

**C.      DOCUMENTS CONSIDERED TO BE RELEVANT**

| Category* | Citation of document, with indication, where appropriate, of the relevant passages | Relevant to claim No. |
|---|---|---|
| A | CN 109587680 A (HUAWEI TECHNOLOGIES CO., LTD.) 05 April 2019 (2019-04-05) entire document | 1-30 |

Form PCT/ISA/210 (second sheet) (January 2015)

**INTERNATIONAL SEARCH REPORT**
Information on patent family members

International application No.

**PCT/CN2022/128443**

| Patent document cited in search report | | | Publication date (day/month/year) | Patent family member(s) | | | Publication date (day/month/year) |
|---|---|---|---|---|---|---|---|
| CN | 109587680 | A | 05 April 2019 | EP | 3691316 | A1 | 05 August 2020 |
| | | | | US | 2020228977 | A1 | 16 July 2020 |
| | | | | JP | 2020535768 | A | 03 December 2020 |
| | | | | WO | 2019062862 | A1 | 04 April 2019 |
| | | | | BR | 112020006302 | A2 | 20 October 2020 |
| | | | | AU | 2018340618 | A1 | 23 April 2020 |

Form PCT/ISA/210 (patent family annex) (January 2015)

**REFERENCES CITED IN THE DESCRIPTION**

**Patent documents cited in the description**

- CN 202111278529